# EUROPEAN PATENT APPLICATION

(11) **EP 4 807 847 A1**
(43) Date of publication of application: **16.09.2026**
(21) Application number: 24887647.6
(22) Date of filing: 20.09.2024
(51) Int. Cl.: H01M 10/0567, H01M 10/054

(54) **ELECTROLYTE SOLUTION, SODIUM SECONDARY BATTERY, AND ELECTRIC DEVICE**

(30) Priority: 09.11.2023 CN 202311487395
(71) Applicant: Contemporary Amperex Technology Co., Limited, Ningde, Fujian 352100 (CN)
(72) Inventor: WU, Kai, Ningde, Fujian 352100 (CN); ZOU, Hailin, Ningde, Fujian 352100 (CN); TIE, Zhiwei, Ningde, Fujian 352100 (CN); CHEN, Peipei, Ningde, Fujian 352100 (CN)
(74) Representative: Ziebig Hengelhaupt Intellectual Property Attorneys Patentanwaltskanzlei PartGmbB
(86) International application number: PCT/CN2024/120019
(87) International publication number: WO 2025/098029

(57) **Abstract**

The present application provides an electrolyte solution, a sodium secondary battery, and an electric device. The electrolyte solution comprises a first additive, a second additive, and a third additive, wherein the first additive comprises a cyclic ester compound containing a sulfate group and/or a sulfite group, the second additive comprises difluorooxalatoborate, and the third additive comprises a fluorinated cyclic carbonate compound. The use of the first additive, the second additive and the third additive in combination can effectively improve the stability of an SEI film, and greatly reduce the gas production degree in the cycle process and the storage process of the sodium secondary battery, thereby improving the storage performance, the fast-charging performance and the cycle performance of the sodium secondary battery.

## Description

### CROSS-REFERENCE TO RELATED APPLICATIONS

This application claims priority to Chinese Patent Application No. 202311487395.8 filed on November 9, 2023 and entitled "ELECTROLYTE, SODIUM SECONDARY BATTERY, AND ELECTRIC APPARATUS", which is incorporated herein by reference in its entirety.

### TECHNICAL FIELD

This application relates to the field of sodium battery technologies, and particularly to an electrolyte, a sodium secondary battery, and an electric apparatus.

### BACKGROUND

In recent years, secondary batteries have been widely used in energy storage power systems such as hydropower, thermal power, wind power, and solar power stations, as well as in a plurality of fields such as electric tools, electric bicycles, electric motorcycles, electric vehicles, military equipment, aerospace, and the like.

Compared with lithium secondary batteries, sodium secondary batteries have greater competitive advantages due to abundant and widely distributed sodium resources. However, the gas evolution problem in sodium secondary batteries seriously affects the electrical performance of the batteries and cannot meet the application needs of new generation electrochemical systems.

### SUMMARY

This application is made in view of the above problems, and an object thereof is to provide an electrolyte that can effectively improve the stability of SEI films and greatly reduce the degree of gas evolution in the cycling process and storage process of sodium secondary batteries, thereby improving the storage performance, fast-charging performance, and cycling performance of the sodium secondary batteries.

A first aspect of this application provides an electrolyte for a sodium secondary battery, the electrolyte including a first additive, a second additive and a third additive, where the first additive includes a cyclic ester compound containing a sulfate group and/or a sulfite group, the second additive includes difluoro(oxalato)borate, the third additive includes a fluorinated cyclic carbonate compound, and the cyclic ester compound containing a sulfate group and/or a sulfite group includes at least one of a compound having a structure represented by Formula I-1 and a compound having a structure represented by Formula I-2,

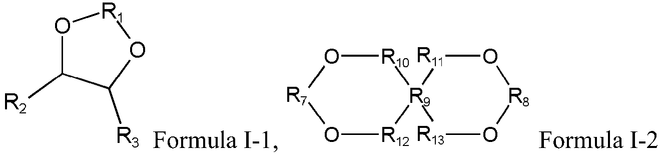

In Formula I-1, R₁ includes 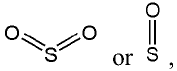 R₂ and R₃ are each independently selected from 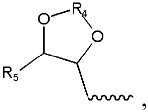 a hydrogen atom, C1-C6 alkyl group, a halogen atom, C1-C3 haloalkyl group, C1-C3 alkoxy group, C1-C3 haloalkoxy group, C1-C3 alkenyl group, ester group, cyano group, sulfonic acid group, and at least one of them, and at least one of R₂ and R₃ includes 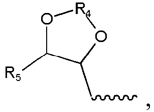 R₄ includes at least one selected from 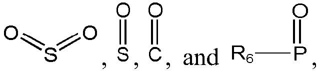 and R₅ and R₆ are each independently selected from 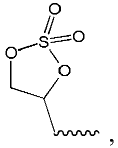 a hydrogen atom, C1-C6 alkyl group, a halogen atom, C1-C3 haloalkyl group, C1-C3 alkoxy group, C1-C3 haloalkoxy group, C1-C3 alkenyl group, ester group, cyano group, sulfonic acid group, and at least one of them.

In Formula 1-2, R₇ includes 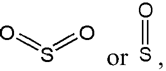 R₈ includes at least one selected from 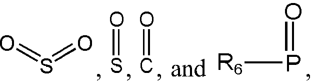 R₉ includes at least one selected from C, C-R₁₄-C, and 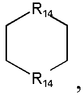 R₁₄ includes at least one selected from a single bond, C1-C6 alkyl group, and C1-C6 ether group, and C1-C3 alkoxy group, and R₁₀, R₁₁, R₁₂, and R₁₃ are each independently selected from at least one of a single bond and C1-C3 alkylene group.

The first additive including the cyclic ester compound containing a sulfate group and/or a sulfite group and the second additive including difluoro(oxalato)borate can be reduced at the negative electrode prior to the solvent to form a film, generating a component containing a sulfate group and/or a sulfite group in the SEI film, as well as other components containing borate, and through the combined use of the two, the overall stability of the interfacial SEI film can be improved, and the overall dissolution degree of the interfacial SEI film in the electrolyte can be reduced to some extent. In addition, the third additive including the fluorinated cyclic carbonate compound is further introduced into the electrolyte, so that the fluorinated carbonate compound forms insoluble fluorides at the interface of the negative electrode plate, such as the insoluble NaF, to compensate for the defect that the SEI film formed by the cyclic ester compound containing a sulfate group and/or a sulfite group and difluoro(oxalato)borate still has a certain solubility in the electrolyte, further reducing the overall dissolution degree of the interfacial SEI film in the electrolyte, thereby greatly reducing the degree of gas evolution, while reducing the direct-current resistance of the sodium secondary battery, improving the storage performance and fast-charging performance of the sodium secondary battery, and comprehensively improving the cycling performance of the sodium secondary battery.

The cyclic ester compound containing a sulfate group and/or a sulfite group can generate a component containing a sulfate group and/or a sulfite group in the SEI film, and the SEI film containing the component can cover the surface of the negative electrode plate to reduce the degree of exposure of the negative electrode plate to the electrolyte, reduce side reactions and gas evolution, and improve the performance of the sodium secondary battery.

In any embodiment, the difluoro(oxalato)borate includes a compound represented by Formula II,

(F₂C₂O₄B)_{y}M^{y+} Formula II

In Formula II, M^{y+} includes one or more selected from Li⁺, Na⁺, K⁺, Rb⁺, Cs⁺, Mg²⁺, Ca²⁺, Ba²⁺, Fe²⁺, Ni²⁺, Al³⁺, Fe³⁺, and Ni³⁺, and y = 1, 2, or 3.

The above difluoro(oxalato)borates can all generate other components containing borate in the SEI film, and the other components can improve the overall stability of the SEI film on the surface of the negative electrode plate, reduce the degree of oxidative decomposition of the overall SEI film, and reduce the solubility of the overall SEI film in the electrolyte solvent to some extent, thereby improving the storage performance of the sodium secondary battery.

In any embodiment, the fluorinated cyclic carbonate compound includes a compound having a structure represented by Formula III,

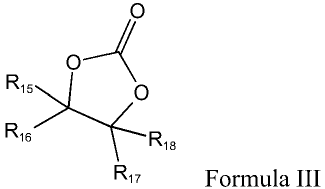

In Formula III, R₁₅, R₁₆, R₁₇ and R₁₈ are each independently selected from a hydrogen atom, C1-C6 alkyl group, a halogen atom, C1-C3 haloalkyl group, C1-C3 alkoxy group, C1-C3 haloalkoxy group, C1-C3 alkenyl group, isocyanate group, ester group, cyano group, sulfonic acid group, and at least one of them, and at least one of R₁₅, R₁₆, R₁₇ and R₁₈ includes an F atom.

The above fluorinated cyclic carbonate compounds can all form insoluble fluorides as part of the components in the SEI film during the charging process of the sodium secondary battery, such as the insoluble NaF, which can effectively reduce the solubility of the overall SEI film in the electrolyte solvent, greatly reduce the probability of the negative electrode plate being exposed to the electrolyte solvent, reduce gas evolution, and improve the storage performance and cycling performance of the sodium secondary battery.

In any embodiment, in Formula I-1, R₁ includes 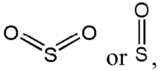 R₂ and R₃ are each independently selected from 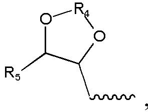 a hydrogen atom, C1-C6 alkyl group, a halogen atom, and at least one of them, at least one of R₂ and R₃ includes 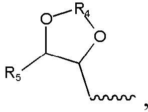 R₄ includes at least one selected from 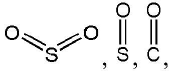 and 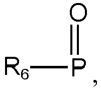 and R₅ and R₆ are each independently selected from a hydrogen atom, C1-C6 alkyl group, a halogen atom, and at least one of them; and/or
**in Formula** 1-2, R₇ includes 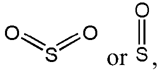 R₈ includes at least one selected from 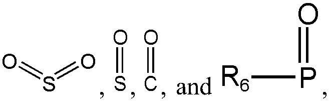 R₉ includes at least one selected from C and C-R₁₄-C, R₁₄ includes at least one selected from a single bond, C1-C6 alkyl group, and C1-C6 ether group, and R₁₀, R₁₁, R₁₂, and R₁₃ are each independently selected from at least one of a single bond and C1-C3 alkylene group.

In any embodiment, the cyclic ester compound containing a sulfate group and/or a sulfite group includes at least one selected from 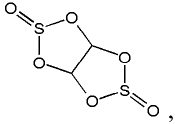 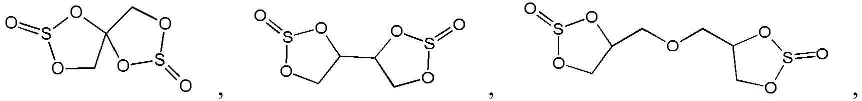 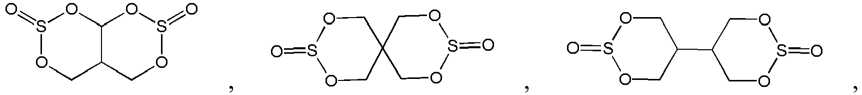 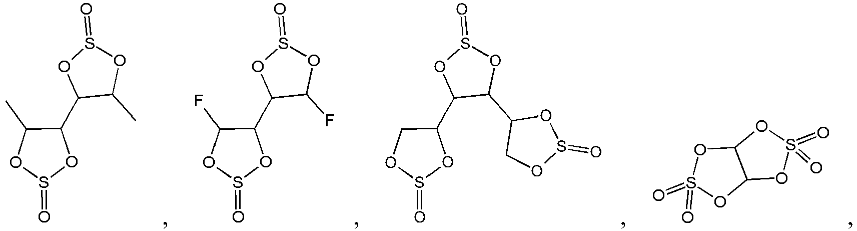 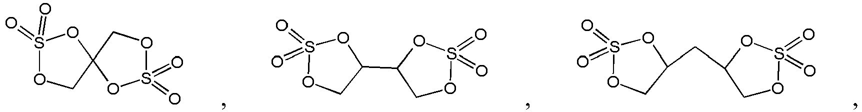 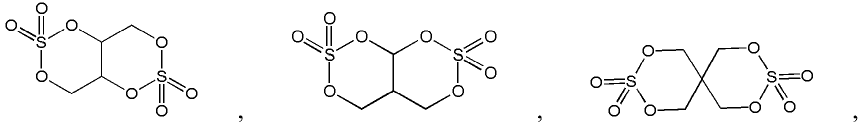 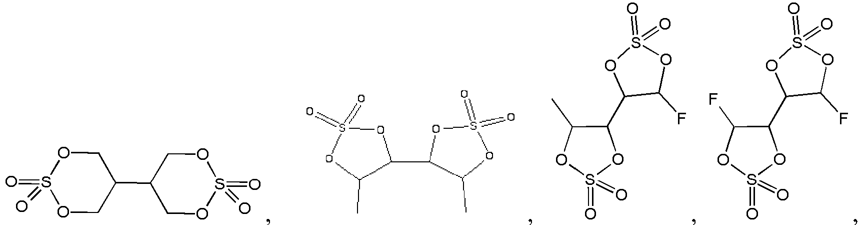 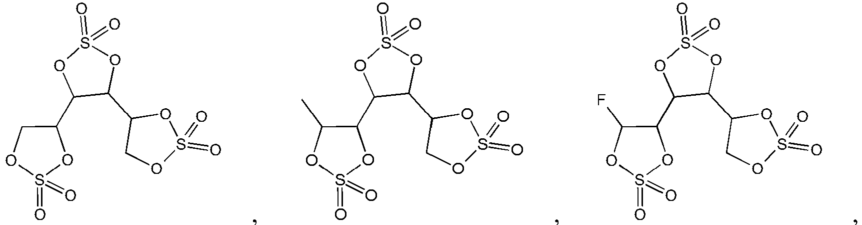 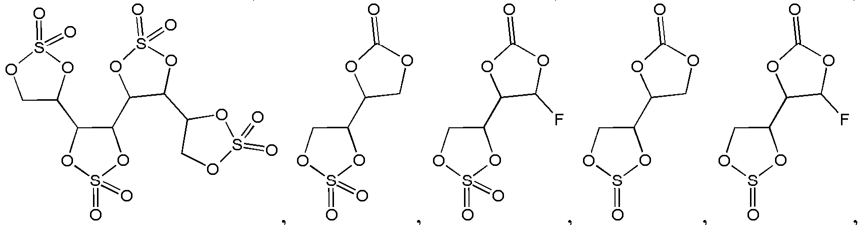 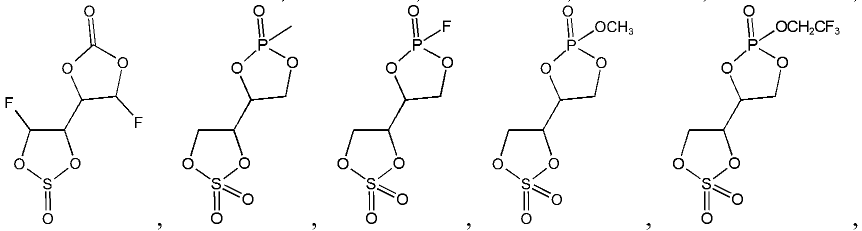 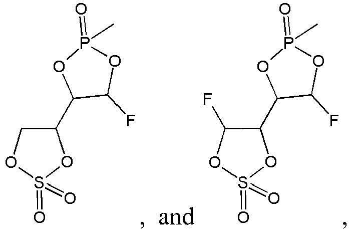 optionally including at least one selected from 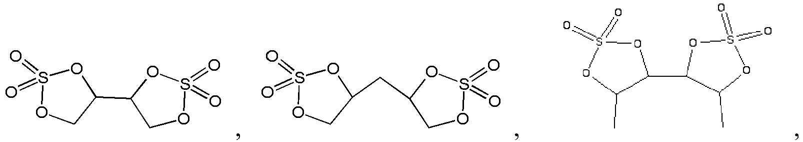 and

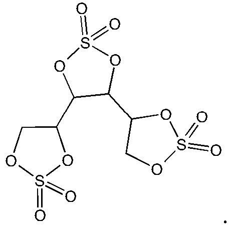

The above substances as the first additive can all be dissolved in the electrolyte, and the SEI film formed during the charging process covers the surface of the negative electrode plate to reduce the degree of exposure of the negative electrode plate to the electrolyte, reduce side reactions and gas evolution, and improve the performance of the sodium secondary battery. In addition, compared with the compound having the structure shown in 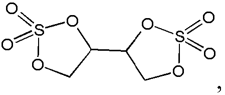 the other compounds have a more stable structure, so that the sodium secondary battery has more excellent cycling performance.

In any embodiment, in Formula II, M^{y+} includes at least one selected from Li⁺ and Na⁺.

Since Li⁺ or Na⁺ has a smaller ionic radius, sodium difluoro(oxalato)borate or lithium difluoro(oxalato)borate has higher solubility, thereby reducing impact of the introduction of the second additive on the conductivity of the electrolyte.

In any embodiment, in Formula III, R₁₅, R₁₆, R₁₇ and R₁₈ are each independently selected from a hydrogen atom, C1-C6 alkyl group, a halogen atom, C1-C3 haloalkyl group, C1-C3 haloalkoxy group, C1-C3 alkenyl group, isocyanate group, and at least one of them, and at least one of R₁₅, R₁₆, R₁₇ and R₁₈ includes an F atom.

In any embodiment, the structure represented by Formula III includes at least one selected from 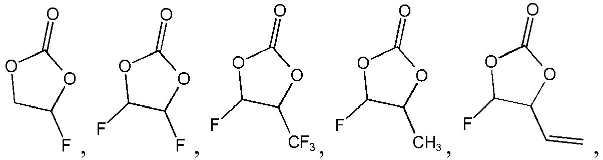 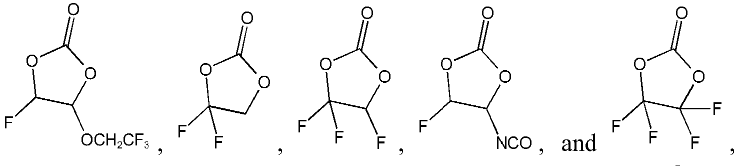 optionally including at least one selected from

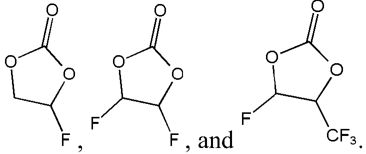

The compounds having the structure represented by Formula III above all have excellent solubility in the electrolyte, and can be dissolved in the electrolyte to form an SEI film during the charge-discharge process.

In any embodiment, the mass ratio of the cyclic ester compound containing a sulfate group and/or a sulfite group to the difluoro(oxalato)borate is 0.01 to 500, optionally 0.2 to 100 or 1 to 100.

Controlling the mass ratio of the cyclic ester compound containing a sulfate group and/or a sulfite group to the difluoro(oxalato)borate to be within an appropriate range can both reduce the degree of gas evolution aggravation caused by the aggravation of oxidative decomposition of the overall SEI film, and reduce the breakage of the SEI film during the cycling process caused by the poor toughness of the overall SEI film, thereby seriously affecting the cycling performance. The appropriate ratio range can balance the storage performance and cycling performance of the sodium secondary battery, and comprehensively improve the performance of the sodium secondary battery. Further controlling the mass ratio of the cyclic ester compound containing a sulfate group and/or a sulfite group to the difluoro(oxalato)borate to be 0.2 to 100 or 1 to 100 helps further balance the storage performance and cycling performance of the sodium secondary battery.

In any embodiment, the mass ratio of the cyclic ester compound containing a sulfate group and/or a sulfite group to the fluorinated cyclic carbonate compound is 0.01 to 100, optionally 0.1 to 50 or 1 to 50.

Controlling the mass ratio of the cyclic ester compound containing a sulfate group and/or a sulfite group to the fluorinated cyclic carbonate compound to be within an appropriate range can balance the storage performance and fast-charging performance of the sodium secondary battery.

In any embodiment, the mass ratio of the difluoro(oxalato)borate to the fluorinated cyclic carbonate compound is 0.01 to 100, optionally 0.1 to 50 or 1 to 50.

Controlling the mass ratio of the difluoro(oxalato)borate to the fluorinated cyclic carbonate compound to be within an appropriate range can both reduce impact on the cycling performance due to limited improvement in the solubility of the overall SEI film, and reduce the risk of sodium deposition brought by an excessive proportion of the fluorinated cyclic carbonate compound, thereby comprehensively improving the performance of the sodium secondary battery. Further controlling the mass ratio of the difluoro(oxalato)borate to the fluorinated cyclic carbonate compound to be 0.1 to 50 or 1 to 50 helps further improve the cycling performance of the sodium secondary battery.

In any embodiment, based on the total mass of the electrolyte, the mass content A of the cyclic ester compound containing a sulfate group and/or a sulfite group, the mass content B of the difluoro(oxalato)borate, and the mass content C of the fluorinated cyclic carbonate compound satisfy: 0.01 ≤ (A × B)/C² ≤ 500, optionally 0.05 ≤ (A × B)/C² ≤ 100.

Simultaneously controlling the cyclic ester compound containing a sulfate group and/or a sulfite group, the difluoro(oxalato)borate, and the fluorinated cyclic carbonate compound to satisfy the above relational expression can both reduce impact on the cycling performance due to limited improvement in the solubility of the overall SEI film caused by the excessive proportion of the cyclic ester compound containing a sulfate group and/or a sulfite group and the difluoro(oxalato)borate, and reduce the risk of sodium deposition brought by an excessive proportion of the fluorinated cyclic carbonate compound, thereby comprehensively improving the performance of the sodium secondary battery.

In any embodiment, based on the total mass of the electrolyte, the mass content A of the cyclic ester compound containing a sulfate group and/or a sulfite group is 0.01% to 5%, optionally 0.1% to 2%.

Controlling the mass content of the cyclic ester compound containing a sulfate group and/or a sulfite group to be within an appropriate range helps to form a component containing a sulfate group and/or a sulfite group in the SEI film, reduce the degree of breakage of the overall SEI film caused by expansion of the sodium secondary battery during the cycling process, thereby improving the protection capability of the overall SEI film, and improving the storage performance of the sodium secondary battery. In addition, this reduces the degree of gas evolution aggravation caused by the oxidative decomposition of excess cyclic ester compound on the positive electrode plate side due to the excessive mass content of the cyclic ester compound, and the degree of aggravation of the performance degradation of the sodium secondary battery caused by an increase in the interface resistance of the positive electrode plate due to accumulation of its oxidative decomposition products on the surface of the positive electrode plate. Further controlling the mass content of the cyclic ester compound to be 0.1% to 2% is conducive to balancing the storage performance and fast-charging performance of the sodium secondary battery, comprehensively improving the performance of the sodium secondary battery.

In any embodiment, based on the total mass of the electrolyte, the mass content B of the difluoro(oxalato)borate is 0.01% to 5%, optionally 0.1% to 2%.

Controlling the mass content of the difluoro(oxalato)borate to be within an appropriate range helps to form other components containing borate in the SEI film, which effectively improves the overall stability of the interfacial SEI film, reduces the degree of gas evolution, improves the cycling performance and storage performance of the sodium secondary battery, and reduces impact on the storage performance caused by the gas evolution aggravation due to oxidative decomposition of excess difluoro(oxalato)borate on the positive electrode plate side caused by the excessive mass content of the difluoro(oxalato)borate, balancing the cycling performance and storage performance of the sodium secondary battery. Further controlling the mass content of the difluoro(oxalato)borate to be 0.1% to 2% is conducive to balancing the storage performance and fast-charging performance of the sodium secondary battery, comprehensively improving the performance of the sodium secondary battery.

In any embodiment, based on the total mass of the electrolyte, the mass content C of the fluorinated cyclic carbonate compound is 0.01% to 5%, optionally 0.1% to 2%.

Controlling the mass content of the fluorinated cyclic carbonate compound to be within an appropriate range helps to form sufficient insoluble NaF, which effectively reduces the solubility of the overall interfacial SEI film in the electrolyte, reduces the degree of gas evolution, improves the cycling performance and storage performance of the sodium secondary battery, and reduces impact on the cycling performance due to the increased risk of sodium deposition caused by the excessive mass content of the fluorinated cyclic carbonate compound, balancing the cycling performance and storage performance of the sodium secondary battery. Further controlling the mass content of the fluorinated cyclic carbonate compound to be 0.1% to 2% is conducive to balancing the storage performance and fast-charging performance of the sodium secondary battery, comprehensively improving the performance of the sodium secondary battery.

A second aspect of this application provides a sodium secondary battery including a positive electrode plate, a negative electrode plate, and the electrolyte of the first aspect of this application.

In any embodiment, the positive electrode plate includes a positive electrode current collector and a positive electrode material layer located on at least one side of the positive electrode current collector, the positive electrode material layer includes a positive electrode active material, and the positive electrode active material includes at least one selected from a layered transition metal oxide, a Prussian blue compound, and a polyanion compound.

In any embodiment, the layered transition metal oxide has a general formula of NaₓMnₐFe_{b}Ni_{c}M_{d}NₑO_{2-δ}Q_{f}, where M includes at least one selected from Ti, Li, V, Cr, Cu, Zn, Zr, Nb, Mo, Sn, Hf, Ta, Mg and Al, N includes at least one selected from Si, P, B, S and Se, Q includes at least one selected from F, Cl and N, 0.66 ≤ x ≤ 1, 0 < a ≤ 0.7, 0 < b ≤ 0.7, 0 ≤ c ≤ 0.23, 0 ≤ d < 0.3, 0 ≤ e ≤ 0.3, 0 ≤ f ≤ 0.3, 0 ≤ δ ≤ 0.3, a + b + c + d + e = 1, 0 < e + f ≤ 0.3, 0 < (e + f)/a ≤ 0.3, 0.2 ≤ d + e + f ≤ 0.3, and (b + c)/a ≤ 1.5.

In any embodiment, the positive electrode active material includes a layered transition metal oxide containing a Cu element;

The mass content of the cyclic ester compound containing a sulfate group and/or a sulfite group in the electrolyte and the mass content of the Cu element in the positive electrode active material have a ratio greater than or equal to 0.002, and the mass content of the Cu element is based on the total mass of the positive electrode active material.

Introducing a Cu element into the positive electrode material layer is conducive to the structural stability of the positive electrode active material; in addition, the Cu element in the positive electrode material layer can also be oxidized with the cyclic ester compound containing a sulfate group and/or a sulfite group at the interface of the positive electrode plate to form an insoluble Cu salt, which is conducive to reducing the degree of gas evolution aggravation caused by the oxidative decomposition of the electrolyte on the positive electrode plate side. Controlling the mass content of the cyclic ester compound in the electrolyte and the mass content of the Cu element in the positive electrode active material to be to be within an appropriate ratio range can effectively reduce the degree of gas evolution aggravation caused by the oxidative decomposition of the electrolyte on the positive electrode plate side.

In any embodiment, based on the total mass of the positive electrode active material, the mass content of the Cu element in the positive electrode active material is less than or equal to 23%, optionally 5% to 20%.

Controlling the mass content of the Cu element in the positive electrode active material to be within an appropriate range is conducive to providing sufficient Cu elements to increase the structural stability of the positive electrode active material, and reduces the degree of performance degradation of the sodium secondary battery caused by the oxidative decomposition of the added electrolyte due to the excessive mass content of the Cu element in the positive electrode material layer. Further controlling the mass content of the Cu element in the positive electrode active material to be 5% to 20% helps further balance the storage performance and fast-charging performance of the sodium secondary battery.

In any embodiment, the negative electrode plate includes a negative electrode current collector and a negative electrode material layer located on at least one side of the negative electrode current collector, and the negative electrode material layer includes a Ca element;

The mass content of the cyclic ester compound containing a sulfate group and/or a sulfite group in the electrolyte and the mass content of the Ca element in the negative electrode material layer have a ratio greater than or equal to 1, and the mass content of the Ca element is based on the total mass of the negative electrode material layer.

Introducing the Ca element into the negative electrode active material is conducive to reducing the degree of sodium dendrite formation; in addition, introducing the Ca element into the negative electrode active material also helps to form an SEI film containing organic calcium salt components with the cyclic ester compound containing a sulfate group and/or a sulfite group, thereby helping improve the overall toughness of the SEI film and reducing the direct-current resistance of the sodium secondary battery. Controlling the mass content of the first additive in the electrolyte and the mass content of the Ca element in the negative electrode material layer to be to be within an appropriate ratio range can balance the storage performance and fast-charging performance of the sodium secondary battery.

In any embodiment, based on the total mass of the negative electrode material layer, the mass content of the Ca element in the negative electrode material layer is 1 ppm to 3000 ppm, optionally 50 ppm to 1000 ppm or 100 ppm to 1000 ppm.

Controlling the mass content of the Ca element in the negative electrode material layer to be within an appropriate range helps to form sufficient SEI film containing organic calcium salt components, improve the overall toughness of the SEI film, and reduce the direct-current resistance of the sodium secondary battery, and reduce the risk of negative electrode plate preparation failure caused by slurry gelation during the negative electrode plate preparation process due to the excessive mass content of the Ca element in the negative electrode material layer, reduction in the first-cycle efficiency and aggravation of gas evolution caused by the formation of Ca(OH)₂ during the preparation process, or the degree of performance degradation of the sodium secondary battery caused by the increase in the direct-current resistance of the sodium secondary battery, balancing the storage performance and fast-charging performance of the sodium secondary battery. Further controlling the mass content of the Ca element in the negative electrode material layer to be 10 ppm to 1000 ppm or 100 ppm to 1000 ppm helps to further comprehensively improve the storage performance and fast-charging performance of the sodium secondary battery.

In any embodiment, the negative electrode material layer further includes a negative electrode active material, and the negative electrode active material includes one or more selected from hard carbon, tin alloy, and metal oxide.

A third aspect of this application provides an electric apparatus including the sodium secondary battery of the second aspect of this application.

### BRIEF DESCRIPTION OF DRAWINGS

In order to more clearly illustrate the technical solutions of the embodiments of this application, the accompanying drawings to be used in the description of the embodiments of this application will be briefly introduced below. Obviously, the accompanying drawings described below are only some embodiments of this application. For those of ordinary skill in the art, other drawings can also be obtained based on these drawings without creative efforts.
FIG. 1 is a schematic diagram of a sodium secondary battery according to an embodiment of this application.
FIG. 2 is an exploded view of the sodium secondary battery according to an embodiment of this application shown in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to an embodiment of this application shown in FIG. 4.
FIG. 6 is a schematic diagram of an electric apparatus using the sodium secondary battery according to an embodiment of this application as a power source.

Reference signs in the accompanying drawings:
1 battery pack; 2 upper case; 3 lower case; 4 battery module; 5 sodium secondary battery; 51 housing; 52 electrode assembly; and 53 cover plate.

### DESCRIPTION OF EMBODIMENTS

Hereinafter, embodiments of the electrolyte, sodium secondary battery and electric apparatus specifically disclosed in this application will be described in detail with appropriate reference to the accompanying drawings. However, there may be cases where unnecessary detailed description is omitted. For example, there may be omissions of detailed description of well-known matters and repeated description of actually identical structures. This is to avoid the following description from becoming unnecessarily lengthy and to facilitate understanding by those skilled in the art. In addition, the accompanying drawings and the following description are provided for those skilled in the art to fully understand this application and are not intended to limit the subject matter described in the claims.

The "ranges" disclosed in this application are defined in the form of lower and upper limits, and a given range is defined by selecting a lower limit and an upper limit, and the selected lower and upper limits define the boundaries of a specific range. The ranges defined in this manner may include or exclude endpoints, and any combination may be made, that is, any lower limit may be combined with any upper limit to form a range. For example, if ranges of 60-120 and 80-110 are listed for a specific parameter, it is also contemplated that ranges of 60-110 and 80-120 are contemplated. In addition, if the minimum range values 1 and 2 are listed, and if the maximum range values 3, 4 and 5 are listed, the following ranges are all contemplated: 1-3, 1-4, 1-5, 2-3, 2-4 and 2-5. In this application, unless otherwise specified, the numerical range "a-b" represents an abbreviated representation of any real number combination between a and b, where a and b are both real numbers. For example, the numerical range "0-5" means that all real numbers between "0-5" have been fully listed herein, and "0-5" is only an abbreviated representation of these numerical combinations. In addition, when a parameter is expressed as an integer ≥2, it is equivalent to disclosing that the parameter is, for example, an integer of 2, 3, 4, 5, 6, 7, 8, 9, 10, 11, 12, or the like.

Unless otherwise specified, all embodiments and optional embodiments of this application can be combined with each other to form a new technical solution.

Unless otherwise specified, all technical features and optional technical features of this application can be combined with each other to form a new technical solution.

Unless otherwise specified, all steps of this application can be performed sequentially or randomly, preferably sequentially. For example, the method includes steps (a) and (b), indicating that the method may include steps (a) and (b) performed sequentially, or may include steps (b) and (a) performed sequentially. For example, the aforementioned method may further include step (c), indicating that step (c) can be added to the method in any order, for example, the method may include steps (a), (b) and (c), or may include steps (a), (c) and (b), or may include steps (c), (a) and (b), or the like.

Unless otherwise specified, the "including" and "including" mentioned in this application indicate open type, and may also be closed type. For example, the "including" and "including" may indicate that other components not listed may also be included or contained, or only the listed components may be included or contained.

Unless otherwise specified, in this application, the term "or" is inclusive. For example, the phrase "A or B" means "A, B, or both A and B". More specifically, the following any one condition satisfies the condition "A or B": A is true (or present) and B is false (or absent); A is false (or absent) and B is true (or present); or both A and B are true (or present).

The gas evolution problem in sodium secondary batteries seriously affects their electrical performance, especially the gas evolution problem on the negative electrode plate side in sodium secondary batteries at low voltage. Usually, film-forming additives are introduced into the electrolyte to form an SEI (Solid Electrolyte Interphase, solid electrolyte interphase) film on the surface of the negative electrode plate, and the formation of the SEI film can prevent further decomposition and gas evolution of the electrolyte to some extent, thereby improving the performance of the sodium secondary battery. However, gas evolution problems still exist in the cycling process and storage process of sodium secondary batteries. Therefore, it is necessary to design an electrolyte to meet the application needs of new generation electrochemical systems.

### [Electrolyte]

Based on this, this application provides an electrolyte for a sodium secondary battery, the electrolyte including a first additive, a second additive and a third additive, where the first additive includes a cyclic ester compound containing a sulfate group and/or a sulfite group, the second additive includes difluoro(oxalato)borate, and the third additive includes a fluorinated cyclic carbonate compound.

In this context, "difluoro(oxalato)borate" refers to a compound having an anion of 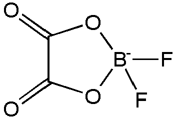 and a cation including but not limited to one or more selected from Li⁺, Na⁺, K⁺, Rb⁺, Cs⁺, Mg²⁺, Ca²⁺, Ba²⁺, Fe²⁺, Ni²⁺, Al³⁺, Fe³⁺, and Ni³⁺,

In some embodiments, the cyclic ester compound containing a sulfate group and/or a sulfite group includes at least one of a compound having a structure represented by Formula I-1 and a compound having a structure represented by Formula I-2:

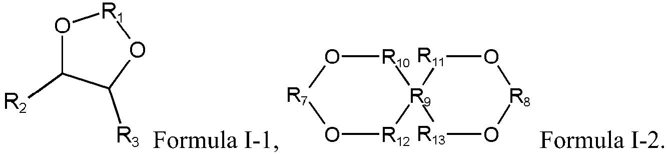

In Formula I-1, R₁ includes 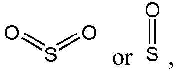 R₂ and R₃ are each independently selected from 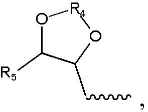 a hydrogen atom, C1-C6 alkyl group, a halogen atom, C1-C3 haloalkyl group, C1-C3 alkoxy group, C1-C3 haloalkoxy group, C1-C3 alkenyl group, ester group, cyano group, sulfonic acid group, and at least one of them, and at least one of R₂ and R₃ includes 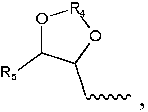 R₄ includes at least one selected from 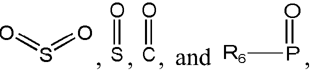 and R₅ and R₆ are each independently selected from 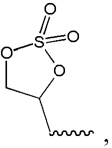 a hydrogen atom, C1-C6 alkyl group, a halogen atom, C1-C3 haloalkyl group, C1-C3 alkoxy group, C1-C3 haloalkoxy group, C1-C3 alkenyl group, ester group, cyano group, sulfonic acid group, and at least one of them.

In Formula 1-2, R₇ includes 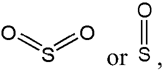 R₈ includes at least one selected from 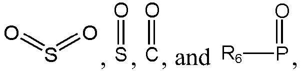 R₉ includes at least one selected from C, C-R₁₄-C, and 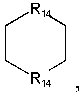 R₁₄ includes at least one selected from a single bond, C1-C6 alkyl group, and C1-C6 ether group, and C1-C3 alkoxy group, and R₁₀, R₁₁, R₁₂, and R₁₃ are each independently selected from at least one of a single bond and C1-C3 alkylene group.

In this application, the term "single bond" refers to a covalent bond formed by sharing a pair of electrons between two atoms. Specifically, when R₁₄ includes a single bond, it means that R₁₄ is a covalent bond that does not include atoms; when R₁₀, R₁₁, R₁₂, and R₁₃ each independently include a single bond, it means that R₁₀, R₁₁, R₁₂, and R₁₃ are each independently a covalent bond that does not include atoms.

Studies have found that the reasons for severe gas evolution in sodium secondary batteries during the cycling process and storage process under low voltage are two-fold: on one hand, the negative electrode potential of the sodium secondary battery is 0.3 V higher than that of the lithium secondary battery, and since a higher potential drives film-forming additives to form unstable SEI films mainly composed of certain components, such unstable SEI films begin to oxidatively decompose at 0.5 V, producing a large amount of gas. On the other hand, the solubility of the SEI film in the electrolyte in the sodium secondary battery is higher than that of the SEI film in the electrolyte in the lithium secondary battery, and the dissolution of the SEI film leads to the exposure of the negative electrode plate to the electrolyte, causing side reactions between the negative electrode plate and the electrolyte to produce a large amount of gas.

It can be understood that the first additive including the cyclic ester compound containing a sulfate group and/or a sulfite group and the second additive including difluoro(oxalato)borate can be reduced at the negative electrode prior to the solvent to form an SEI film, generating a component containing a sulfate group and/or a sulfite group in the SEI film, as well as other components containing borate, and through the synergistic effect of the two, the overall stability of the interfacial SEI film can be improved, and the overall dissolution degree of the interfacial SEI film in the electrolyte can be reduced to some extent. In addition, the third additive including the fluorinated cyclic carbonate compound is further introduced into the electrolyte, so that the fluorinated carbonate compound forms insoluble fluorides at the interface of the negative electrode plate, such as the insoluble NaF, to compensate for the defect that the SEI film formed by the cyclic ester compound containing a sulfate group and/or a sulfite group and difluoro(oxalato)borate still has a certain solubility in the electrolyte, further reducing the overall dissolution degree of the interfacial SEI film in the electrolyte, thereby greatly reducing the degree of gas evolution, while reducing the direct-current resistance of the sodium secondary battery, improving the storage performance and fast-charging performance of the sodium secondary battery, and comprehensively improving the cycling performance of the sodium secondary battery.

In some embodiments, the difluoro(oxalato)borate includes a compound represented by Formula II,

(F₂C₂O₄B)_{y}M^{y+} Formula II

In Formula II, M^{y+} includes one or more selected from Li⁺, Na⁺, K⁺, Rb⁺, Cs⁺, Mg²⁺, Ca²⁺, Ba²⁺, Fe²⁺, Ni²⁺, Al³⁺, Fe³⁺, and Ni³⁺, and y = 1, 2, or 3.

In some embodiments, the difluoro(oxalato)borate includes one or more selected from sodium difluoro(oxalato)borate, lithium difluoro(oxalato)borate, potassium difluoro(oxalato)borate, magnesium difluoro(oxalato)borate, and iron difluoro(oxalato)borate. In some embodiments, the difluoro(oxalato)borate includes sodium difluoro(oxalato)borate. In some embodiments, the difluoro(oxalato)borate includes lithium difluoro(oxalato)borate.

The above difluoro(oxalato)borates can all generate other components containing borate in the SEI film, and the other components can improve the overall stability of the SEI film on the surface of the negative electrode plate, reduce the degree of oxidative decomposition of the overall SEI film, and reduce the solubility of the overall SEI film in the electrolyte solvent to some extent, thereby improving the storage performance of the sodium secondary battery.

In some embodiments, in Formula I-1, R₁ includes 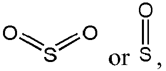 R₂ and R₃ are each independently selected from 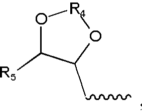 , a hydrogen atom, C1-C6 alkyl group, a halogen atom, and at least one of them, at least one of R₂ and R₃ includes 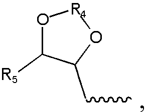 R₄ includes at least one selected from 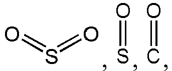 and 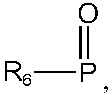 and R₅ and R₆ are each independently selected from a hydrogen atom, C1-C6 alkyl group, a halogen atom, and at least one of them; and/or
in Formula 1-2, R₇ includes 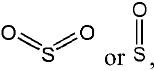 R₈ includes at least one selected from 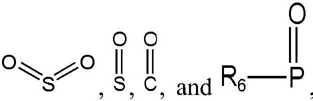 R₉ includes at least one selected from C and C-R₁₄-C, R₁₄ includes at least one selected from a single bond, C1-C6 alkyl group, and C1-C6 ether group, and R₁₀, R₁₁, R₁₂, and R₁₃ are each independently selected from at least one of a single bond and C1-C3 alkylene group.

In some embodiments, the cyclic ester compound containing a sulfate group and/or a sulfite group includes at least one selected from 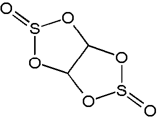 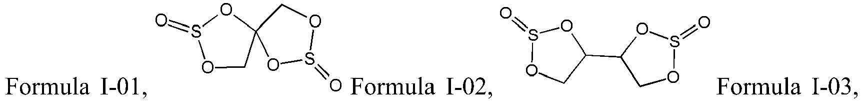 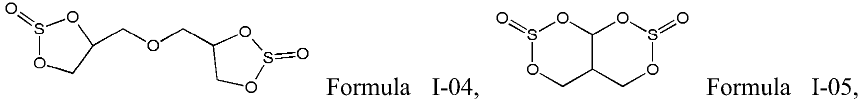 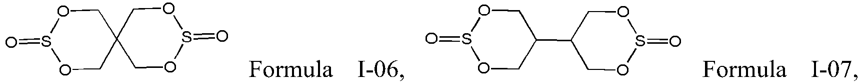 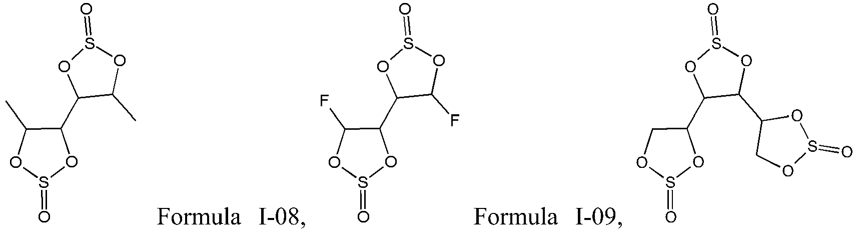 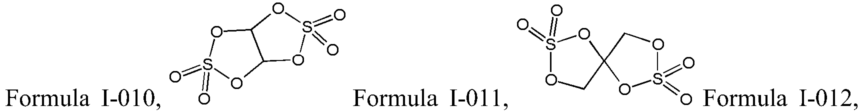 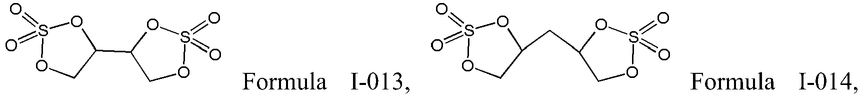 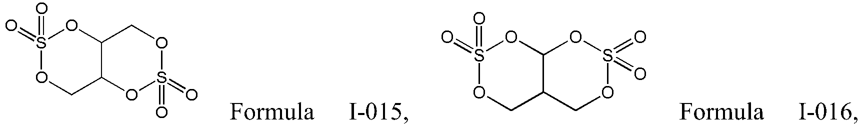 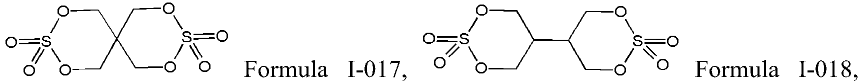 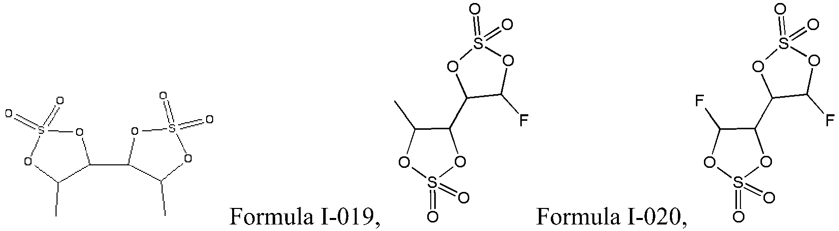 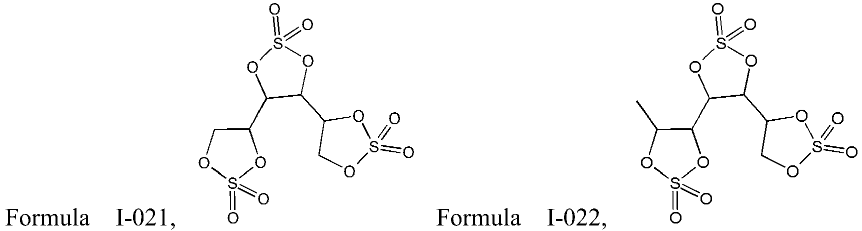 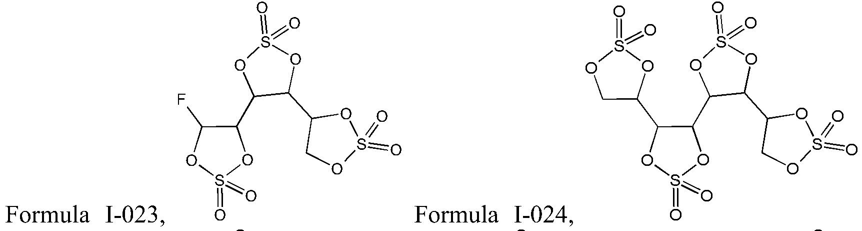 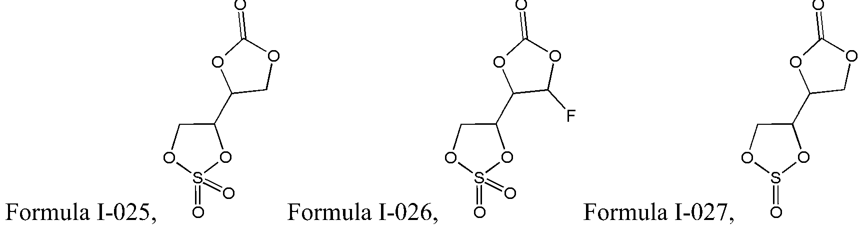 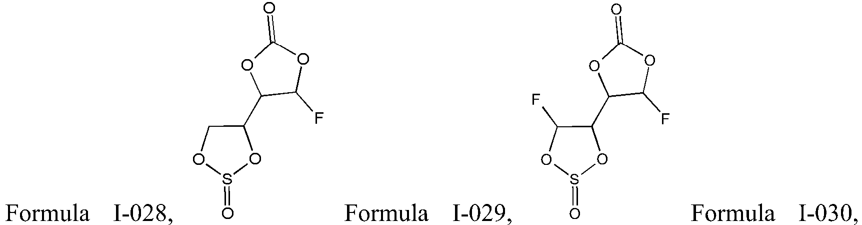 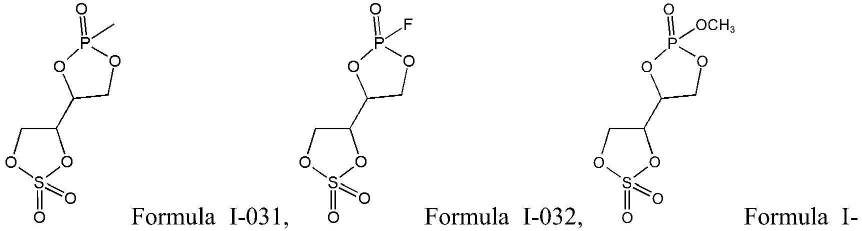 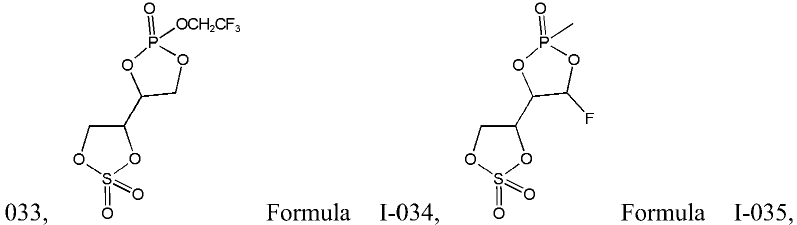 and

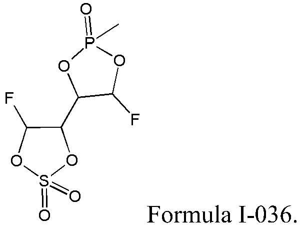

In this context, in 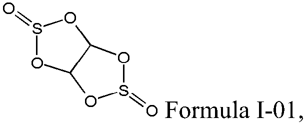 R₁₀, R₁₁, R₁₂, and R₁₃ are single bonds, and R₉ is C-C; in 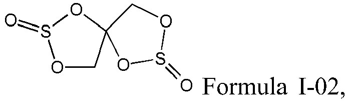 R₁₀ and R₁₁ are methylene groups, R₁₂ and R₁₃ are single bonds, and R₉ is C; in 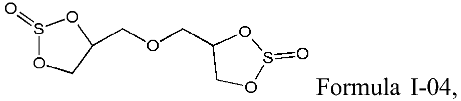 R₁₀ and R₁₁ are single bonds, R₁₂ and R₁₃ are methylene groups, and R₉ is C-C-O-C-C; and in 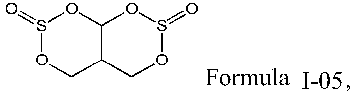 R₁₀ and R₁₁ are single bonds, R₁₂ and R₁₃ are methylene groups, and R₉ is C-C.

The above substances as the first additive can all be dissolved in the electrolyte, and the SEI film formed during the charging process covers the surface of the negative electrode plate to reduce the degree of exposure of the negative electrode plate to the electrolyte, reduce side reactions and gas evolution, and improve the performance of the sodium secondary battery. In addition, compared with the compound having the structure represented by Formula I-013, the other compounds have a more stable structure, so that the sodium secondary battery has more excellent cycling performance.

In some embodiments, in Formula II, M^{y+} includes at least one selected from Li⁺ and Na⁺. In some embodiments, in Formula II, M^{y+} includes Li⁺. In some embodiments, in Formula II, M^{y+} includes Na⁺.

Since Li⁺ or Na⁺ has a smaller ionic radius, sodium difluoro(oxalato)borate or lithium difluoro(oxalato)borate has higher solubility, thereby reducing impact of the introduction of the second additive on the conductivity of the electrolyte.

In some embodiments, in Formula III, R₁₅, R₁₆, R₁₇ and R₁₈ are each independently selected from a hydrogen atom, C1-C6 alkyl group, a halogen atom, C1-C3 haloalkyl group, C1-C3 haloalkoxy group, C1-C3 alkenyl group, isocyanate group, and at least one of them, and at least one of R₁₅, R₁₆, R₁₇ and R₁₈ includes an F atom.

In some embodiments, the structure represented by Formula III includes

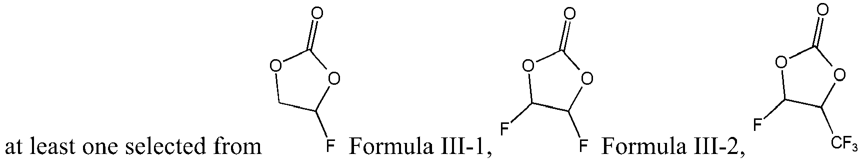

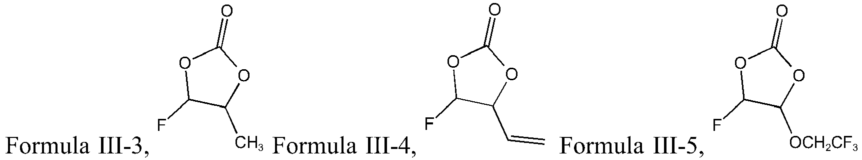

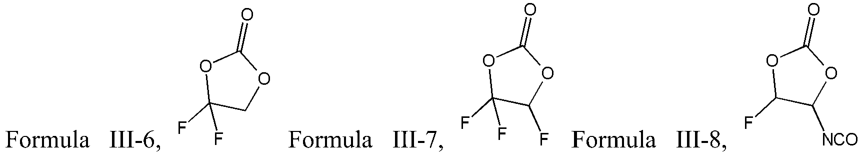

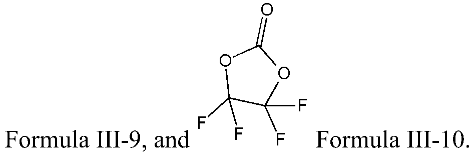

The compounds having the structure represented by Formula III above all have excellent solubility in the electrolyte, and can be dissolved in the electrolyte to form an SEI film during the charge-discharge process.

In some embodiments, the mass ratio of the cyclic ester compound containing a sulfate group and/or a sulfite group to the difluoro(oxalato)borate is 0.01 to 500, for example, 0.2 to 100 or 1 to 100. In some embodiments, the mass ratio of the cyclic ester compound containing a sulfate group and/or a sulfite group to the difluoro(oxalato)borate may be 0.01, 0.05, 0.1, 0.2, 0.5, 1, 5, 10, 20, 30, 40, 50, 60, 70, 80, 90, 100, 200, 300, 400, 500, or a value in a range formed by any two of the above values.

Controlling the mass ratio of the cyclic ester compound containing a sulfate group and/or a sulfite group to the difluoro(oxalato)borate to be within an appropriate range can balance the storage performance and cycling performance of the sodium secondary battery, and comprehensively improve the performance of the sodium secondary battery. If the mass ratio of the cyclic ester compound containing a sulfate group and/or a sulfite group to the difluoro(oxalato)borate is less than 0.01, the overall SEI film tends to be distributed in a dotted manner, leading to greater brittleness of the overall SEI, and during the cycling process of the sodium secondary battery, is prone to breakage due to volume expansion and contraction, affecting the cycling performance of the sodium secondary battery; if the mass ratio of the cyclic ester compound containing a sulfate group and/or a sulfite group to the difluoro(oxalato)borate is greater than 500, the overall stability of the SEI film deteriorates. Further controlling the mass ratio of the cyclic ester compound containing a sulfate group and/or a sulfite group to the difluoro(oxalato)borate to be 0.2 to 100 or 1 to 100 helps further balance the storage performance and cycling performance of the sodium secondary battery.

In some embodiments, the mass ratio of the cyclic ester compound containing a sulfate group and/or a sulfite group to the fluorinated cyclic carbonate compound is 0.01 to 100, for example, 0.1 to 50 or 1 to 50. In some embodiments, the mass ratio of the cyclic ester compound containing a sulfate group and/or a sulfite group to the fluorinated cyclic carbonate compound may be 0.01, 0.05, 0.1, 0.2, 0.5, 1, 5, 10, 20, 30, 40, 50, 60, 70, 80, 90, 100, or a value in a range formed by any two of the above values.

Studies have found that the fluorinated cyclic carbonate compound is unstable and easily generates acidic substances such as HF at high temperatures, and the acidic substances damage the interface on the positive electrode plate side, leading to electrolyte oxidative gas evolution on the positive electrode plate of the sodium secondary battery at high temperatures, affecting the performance of the sodium secondary battery, while the cyclic ester compound containing a sulfate group and/or a sulfite group can not only form an SEI film on the negative electrode plate side, but also form a CEI film at the interface on the positive electrode plate side, and the formation of the CEI film helps protect the interface on the positive electrode plate side from being damaged by acidic substances. Controlling the mass ratio of the cyclic ester compound containing a sulfate group and/or a sulfite group to the fluorinated cyclic carbonate compound to be within an appropriate range can balance the storage performance and fast-charging performance of the sodium secondary battery. If the mass ratio of the cyclic ester compound containing a sulfate group and/or a sulfite group to the fluorinated cyclic carbonate compound is less than 0.01, excessive fluorinated cyclic carbonate compound leads to severe gas evolution in the sodium secondary battery at high temperatures; if the mass ratio of the cyclic ester compound containing a sulfate group and/or a sulfite group to the fluorinated cyclic carbonate compound is greater than 100, excessive cyclic ester compound containing a sulfate group and/or a sulfite group easily forms an excessively thick CEI film on the positive electrode plate side, leading to an increase in the direct-current resistance of the sodium secondary battery and affecting the fast-charging performance of the sodium secondary battery.

In some embodiments, the mass ratio of the difluoro(oxalato)borate to the fluorinated cyclic carbonate compound is 0.01 to 100, for example, 0.1 to 50 or 1 to 50. In some embodiments, the mass ratio of the difluoro(oxalato)borate to the fluorinated cyclic carbonate compound may be 0.01, 0.05, 0.1, 0.2, 0.5, 1, 5, 10, 20, 30, 40, 50, 60, 70, 80, 90, 100, or a value in a range formed by any two of the above values.

Controlling the mass ratio of the difluoro(oxalato)borate to the fluorinated cyclic carbonate compound to be within an appropriate range can comprehensively improve the performance of the sodium secondary battery. If the mass ratio of the difluoro(oxalato)borate to the fluorinated cyclic carbonate compound is less than 0.01, the degree of sodium deposition is aggravated; if the mass ratio of the difluoro(oxalato)borate to the fluorinated cyclic carbonate compound is greater than 100, the reduction in gas evolution is limited. Further controlling the mass ratio of the difluoro(oxalato)borate to the fluorinated cyclic carbonate compound to be 0.1 to 50 or 1 to 50 helps further improve the cycling performance of the sodium secondary battery.

In some embodiments, based on the total mass of the electrolyte, the mass content A of the cyclic ester compound containing a sulfate group and/or a sulfite group, the mass content B of the difluoro(oxalato)borate, and the mass content C of the fluorinated cyclic carbonate compound satisfy: 0.01 ≤ (A × B)/C² ≤ 500, and in some embodiments, 0.05 ≤ (A × B)/C² ≤ 100. In some embodiments, based on the total mass of the electrolyte, the relational expression (A × B)/C² between the mass content A of the cyclic ester compound containing a sulfate group and/or a sulfite group, the mass content B of the difluoro(oxalato)borate, and the mass content C of the fluorinated cyclic carbonate compound may be 0.01, 0.05, 0.1, 0.2, 0.5, 1, 5, 10, 20, 30, 40, 50, 60, 70, 80, 90, 100, 200, 300, 400, 500, or a value in a range formed by any two of the above values.

The SEI film containing sulfate salt components formed by the cyclic ester compound containing a sulfate group and/or a sulfite group on the negative electrode plate side and the SEI film containing borate components formed by the difluoro(oxalato)borate on the negative electrode plate side both have a certain solubility in the solvent of the electrolyte, and the SEI film containing fluoride components formed by the fluorinated cyclic carbonate compound on the negative electrode plate side can reduce the overall solubility of the SEI film, but will deteriorate the overall sodium-ion conductivity of the SEI film. Simultaneously controlling the cyclic ester compound containing a sulfate group and/or a sulfite group, the difluoro(oxalato)borate and the fluorinated cyclic carbonate compound to satisfy the above relational expression can both reduce impact on the cycling performance due to limited improvement in the solubility of the overall SEI film, and reduce the risk of sodium deposition, and comprehensively improve the performance of the sodium secondary battery. If the relational expression of the three, namely the cyclic ester compound containing a sulfate group and/or a sulfite group, difluoro(oxalato)borate, and the fluorinated cyclic carbonate compound, is less than 0.01, the degree of sodium deposition is aggravated; if the relational expression of the three is greater than 500, the reduction in gas evolution is limited.

In some embodiments, based on the total mass of the electrolyte, the mass content A of the cyclic ester compound containing a sulfate group and/or a sulfite group is 0.01% to 5%, for example, 0.1% to 2%. In some embodiments, based on the total mass of the electrolyte, the mass content A of the cyclic ester compound containing a sulfate group and/or a sulfite group may be 0.01%, 0.05%, 0.1%, 0.2%, 0.5%, 0.7%, 1%, 1.5%, 2%, 3%, 4%, 5%, or a value in a range formed by any two of the above values.

Controlling the mass content of the cyclic ester compound containing a sulfate group and/or a sulfite group to be within an appropriate range helps to generate a component containing a sulfate group and/or a sulfite group in the SEI film, and reduces the degree of breakage of the overall SEI film caused by expansion of the sodium secondary battery during the cycling process, thereby improving the protection capability of the overall SEI film, and improving the storage performance of the sodium secondary battery. In addition, this reduces the degree of gas evolution aggravation caused by the oxidative decomposition of excess cyclic ester compound on the positive electrode plate side due to the excessive mass content of the cyclic ester compound, and the degree of aggravation of the performance degradation of the sodium secondary battery caused by an increase in the interface resistance of the positive electrode plate due to accumulation of its oxidative decomposition products on the surface of the positive electrode plate. Further controlling the mass content of the cyclic ester compound to be 0.1% to 2% is conducive to balancing the storage performance and fast-charging performance of the sodium secondary battery, comprehensively improving the performance of the sodium secondary battery.

In some embodiments, based on the total mass of the electrolyte, the mass content B of the difluoro(oxalato)borate is 0.01% to 5%, for example, 0.1% to 2%. In some embodiments, based on the total mass of the electrolyte, the mass content B of the difluoro(oxalato)borate may be 0.01%, 0.05%, 0.1%, 0.2%, 0.5%, 0.7%, 1%, 1.5%, 2%, 3%, 4%, 5%, or a value in a range formed by any two of the above values.

Controlling the mass content of the difluoro(oxalato)borate to be within an appropriate range helps to form other components containing borate in the SEI film, which effectively improves the overall stability of the interfacial SEI film, reduces the degree of gas evolution, improves the cycling performance and storage performance of the sodium secondary battery, and reduces impact on the storage performance caused by the gas evolution aggravation due to oxidative decomposition of excess difluoro(oxalato)borate on the positive electrode plate side caused by the excessive mass content of the difluoro(oxalato)borate, balancing the cycling performance and storage performance of the sodium secondary battery. Further controlling the mass content of the difluoro(oxalato)borate to be 0.1% to 2% is conducive to balancing the storage performance and fast-charging performance of the sodium secondary battery, comprehensively improving the performance of the sodium secondary battery.

In some embodiments, based on the total mass of the electrolyte, the mass content C of the fluorinated cyclic carbonate compound is 0.01% to 5%, for example, 0.1% to 2%. In some embodiments, based on the total mass of the electrolyte, the mass content C of the fluorinated cyclic carbonate compound may be 0.01%, 0.05%, 0.1%, 0.2%, 0.5%, 0.7%, 1%, 1.5%, 2%, 3%, 4%, 5%, or a value in a range formed by any two of the above values.

Controlling the mass content of the fluorinated cyclic carbonate compound to be within an appropriate range helps to form sufficient insoluble NaF, which effectively reduces the solubility of the overall interfacial SEI film in the electrolyte, reduces the degree of gas evolution, improves the cycling performance and storage performance of the sodium secondary battery, and reduces impact on the cycling performance due to the increased risk of sodium deposition caused by the excessive mass content of the fluorinated cyclic carbonate compound, balancing the cycling performance and storage performance of the sodium secondary battery. Further controlling the mass content of the fluorinated cyclic carbonate compound to be 0.1% to 2% is conducive to balancing the storage performance and fast-charging performance of the sodium secondary battery, comprehensively improving the performance of the sodium secondary battery.

In some embodiments, the electrolyte includes a sodium salt, and the sodium salt includes one or more selected from NaPF₆, NaFSI, NaBF₄, NaN(SO₂F)₂, NaClO₄, NaAsF₆, NaB(C₂O₄)₂, and NaBF₂(C₂O₄).

In some embodiments, the sodium salt includes NaPF₆. In some embodiments, the sodium salt includes NaBF₄. In some embodiments, the sodium salt includes NaFSI. In some embodiments, the sodium salt includes NaPF₆ and NaFSI. In some embodiments, the sodium salt includes NaPF₆ and NaClO₄.

In some embodiments, the electrolyte includes a solvent, and the solvent includes one or more selected from chain carbonate solvents, chain carboxylate solvents, cyclic carbonate solvents, and ether solvents.

In some embodiments, the chain carbonate solvent includes one or more selected from dimethyl carbonate, diethyl carbonate, methyl ethyl carbonate, methyl propyl carbonate, methyl isopropyl carbonate, methyl butyl carbonate, ethyl propyl carbonate, dipropyl carbonate, and dibutyl carbonate;
the chain carboxylate solvent includes one or more selected from methyl formate, ethyl formate, methyl propionate, ethyl propionate, propyl propionate, ethyl butyrate, methyl acetate, ethyl acetate, and propyl acetate;
the cyclic carbonate includes one or more selected from ethylene carbonate, propylene carbonate, butylene carbonate, vinylene carbonate, fluoroethylene carbonate, ethylene sulfite, propylene sulfite, vinyl ethylene carbonate, 4-ethynyl-1,3-dioxolan-2-one, cis-4,5-difluoro-1,3-dioxolan-2-one, trans-4,5-difluoro-1,3-dioxolan-2-one; and
the ether solvent includes one or more selected from 1,3-dioxolane, tetrahydrofuran, 2-methyltetrahydrofuran, tetrahydropyran, 1,2-dimethoxyethane, diethylene glycol dimethyl ether, 1,2-diethoxyethane, and 1,2-dibutoxyethane.

### [Positive electrode plate]

The positive electrode plate includes a positive electrode current collector and a positive electrode material layer located on at least one side of the positive electrode current collector.

As an example, the positive electrode current collector has two opposite surfaces in its own thickness direction, and the positive electrode material layer is provided on either or both of the two opposite surfaces of the positive electrode current collector.

In some embodiments, the positive electrode current collector may adopt a metal foil or a composite current collector. For example, as the metal foil, an aluminum foil may be adopted. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver and silver alloy, or the like) on a polymer material substrate (such as a substrate of polypropylene (PP), polyethylene terephthalate (PET), polybutylene terephthalate (PBT), polystyrene (PS), or polyethylene (PE)).

In some embodiments, the positive electrode material layer includes a positive electrode active material, and the positive electrode active material may adopt a positive electrode active material for batteries known in the art. For example, the positive electrode active material may include at least one of the following materials: layered transition metal oxides, polyanion compounds or Prussian blue compounds. However, this application is not limited to these materials, and other conventional materials that can be used as positive electrode active materials for batteries may also be used. These positive electrode active materials may be used alone or in combination of two or more. Among them, the Prussian blue compound includes NaₓP[R(CN)₆]_{δ}·zH₂O, where the P and R are each independently selected from at least one of transition metal elements, 0 < x ≤ 2, 0 < δ ≤ 1 and 0 ≤ z ≤ 10; the polyanion compound includes Na_{b}Me_{c}(PO₄)_{d}O₂X, where A includes one or more selected from H, Li, Na, K, and NH₄, Me includes one or more selected from Ti, Cr, Mn, Fe, Co, Ni, V, Cu, and Zn, X includes one or more selected from F, Cl and Br, 0 < b ≤ 4, 0 < c ≤ 2, and 1 ≤ d ≤ 3.

In some embodiments, the layered transition metal oxide has a general formula of NaₓMnₐFe_{b}Ni_{c}M_{d}NₑO_{2-δ}Q_{f}, where M includes at least one selected from Ti, Li, V, Cr, Cu, Zn, Zr, Nb, Mo, Sn, Hf, Ta, Mg and Al, N includes at least one selected from Si, P, B, S and Se, Q includes at least one selected from F, Cl and N, 0.66 ≤ x ≤ 1, 0 < a ≤ 0.7, 0 < b ≤ 0.7, 0 ≤ c ≤ 0.23, 0 ≤ d < 0.3, 0 ≤ e ≤ 0.3, 0 ≤ f ≤ 0.3, 0 ≤ δ ≤ 0.3, a + b + c + d + e = 1, 0 < e + f ≤ 0.3, 0 < (e + f)/a ≤ 0.3, 0.2 ≤ d + e + f ≤ 0.3, and (b + c)/a ≤ 1.5.

The layered transition metal oxide positive electrode active material has the advantage of high voltage, but the transition metals therein catalyze the oxidation of the solvent in the electrolyte to form RH⁺, and since RH⁺ is not resistant to reduction, the exposure of the negative electrode plate also causes the RH⁺ migrating to the surface of the negative electrode plate to be reduced to form components that are not resistant to oxidation, aggravating the gas evolution on the negative electrode plate side. Through the combined use of the first additive and the second additive, it is conducive to improving the overall stability of the interfacial SEI film, while reducing the overall dissolution degree of the interfacial SEI film in the electrolyte, and reducing the degree of exposure of the negative electrode plate, thereby greatly reducing the degree of gas evolution, and comprehensively improving the cycling performance and storage performance of the sodium secondary battery.

In some embodiments, the positive electrode active material includes at least one selected from Na[Cu_{1/9}Ni_{2/9}Fe_{1/3}Mn_{1/3}]O₂ and Na_{7/9}[Cu_{2/9}Fe_{1/9}Mn_{2/3}]O₂.

In some embodiments, the positive electrode active material includes a layered transition metal oxide containing a Cu element; the mass content of the cyclic ester compound in the electrolyte and the mass content of the Cu element in the positive electrode active material have a ratio greater than or equal to 0.004, and the mass content of the Cu element is based on the total mass of the positive electrode active material. In some embodiments, the mass content of the first additive in the electrolyte and the mass content of the Cu element in the positive electrode active material may have a ratio of 0.004, 0.005, 0.01, 0.05, 0.1, 0.5, 1, 2, 3, 4, 5, 10, 50, 100, 500, 1000, 2000, 5000, or a value in a range constituted by any two of the above points, and the mass content of the Cu element is based on the total mass of the positive electrode active material.

It can be understood that introducing a Cu element into the positive electrode active material is conducive to the structural stability of the positive electrode active material and improves the cycling performance of the sodium secondary battery. However, at the same time, the Cu element in the positive electrode material layer undergoes valence state changes under high voltage, producing Cu³⁺. Cu³⁺ has high oxidation activity and can accelerate the decomposition of the electrolyte, thereby deteriorating the performance of the sodium secondary battery. Whereas, the cyclic ester compound containing a sulfate group and/or a sulfite group in the electrolyte can be oxidized with the Cu element in the positive electrode material layer at the interface of the positive electrode plate to form an insoluble Cu salt, which is conducive to reducing the degree of gas evolution aggravation caused by the decomposition of the electrolyte on the positive electrode plate side. Controlling the mass content of the cyclic ester compound in the electrolyte and the mass content of the Cu element in the positive electrode active material to be to be within an appropriate ratio range can effectively reduce the degree of gas evolution aggravation caused by the decomposition of the electrolyte on the positive electrode plate side.

In some embodiments, based on the total mass of the positive electrode active material, the mass content of the Cu element in the positive electrode active material is less than or equal to 23%. In some embodiments, based on the total mass of the positive electrode active material, the mass content of the Cu element in the positive electrode active material may be 0.01%, 0.1%, 0.5%, 1%, 2%, 5%, 7%, 10%, 12%, 15%, 18%, 20%, 23% or a value in a range formed by any two of the above values.

Controlling the mass content of the Cu element in the positive electrode active material to be within an appropriate range is conducive to providing sufficient Cu elements to increase the structural stability of the positive electrode active material, and reduces the degree of performance degradation of the sodium secondary battery caused by the oxidative decomposition of the added electrolyte due to the excessive mass content of the Cu element in the positive electrode material layer.

In some embodiments, based on the total mass of the positive electrode active material, the mass content of the Cu element in the positive electrode active material is 5% to 20%.

Further controlling the mass content of the Cu element in the positive electrode material layer to be 5% to 20% helps further balance the storage performance and fast-charging performance of the sodium secondary battery.

In some embodiments, the positive electrode active material may not contain a Cu element.

In some embodiments, the positive electrode material layer may further optionally include a binder. For example, the binder may include at least one selected from polyvinylidene fluoride (PVDF), polytetrafluoroethylene (PTFE), vinylidene fluoride-hexafluoropropylene-tetrafluoroethylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode material layer may further optionally include a conductive agent. For example, the conductive agent may include at least one selected from superconducting carbon, acetylene black, carbon black, Ketjen black, carbon dots, carbon nanotubes, graphene, and carbon nanofibers.

In some embodiments, the positive electrode plate can be prepared in the following manner: dispersing the components for preparing the positive electrode plate described above, such as the positive electrode active material, conductive agent, binder and any other components, in a solvent (such as N-methylpyrrolidone) to form a positive electrode slurry; applying the positive electrode slurry onto the positive electrode current collector; and then performing processes such as drying and cold pressing to obtain the positive electrode plate.

### [Negative electrode plate]

The negative electrode plate includes a negative electrode current collector and a negative electrode material layer located on at least one side of the negative electrode current collector.

As an example, the negative electrode current collector has two opposite surfaces in its own thickness direction, and the negative electrode material layer is provided on either or both of the two opposite surfaces of the negative electrode current collector.

In some embodiments, the negative electrode current collector may adopt a metal foil or a composite current collector. For example, as the metal foil, a copper foil may be adopted. The composite current collector may include a polymer material base layer and a metal layer formed on at least one surface of the polymer material base material. The composite current collector may be formed by forming a metal material (copper, copper alloy, nickel, nickel alloy, titanium, titanium alloy, silver and silver alloy, or the like) on a polymer material substrate (such as a substrate of polypropylene (PP), polyethylene terephthalate (PET), polybutylene terephthalate (PBT), polystyrene (PS), or polyethylene (PE)).

The negative electrode material layer further includes a negative electrode active material, and the negative electrode active material includes one or more selected from hard carbon, metal sodium, sodium-tin alloy, and metal oxide.

The above negative electrode active materials all have excellent sodium storage capacity, which can make the sodium secondary battery have high energy density.

In some embodiments, the negative electrode material layer further includes a Ca element; the mass content of the cyclic ester compound containing a sulfate group and/or a sulfite group in the electrolyte and the mass content of the Ca element in the negative electrode material layer have a ratio greater than or equal to 1, and the mass content of the Ca element is based on the total mass of the negative electrode material layer. In some embodiments, the mass content of the cyclic ester compound containing a sulfate group and/or a sulfite group in the electrolyte and the mass content of the Ca element in the negative electrode material layer may have a ratio of 1, 2, 3, 4, 5, 6, 7, 8, 9, 10, 100, 200, 300, 400, 500, 600, 700, 800, 900, 1000, or a value in a range constituted by any two of the above points, and the mass content of the Ca element is based on the total mass of the negative electrode material layer.

Introducing a Ca element into the negative electrode active material is conducive to reducing the degree of sodium dendrite formation; in addition, introducing a Ca element into the negative electrode active material also helps to form an SEI film containing organic calcium salt components with the cyclic ester compound containing a sulfate group and/or a sulfite group, thereby improving the overall toughness of the SEI film and reducing the direct-current resistance of the sodium secondary battery. Controlling the mass content of the first additive in the electrolyte and the mass content of the Ca element in the negative electrode material layer to be within an appropriate ratio range can balance the storage performance and fast-charging performance of the sodium secondary battery.

In some embodiments, based on the total mass of the negative electrode material layer, the mass content of the Ca element in the negative electrode material layer is 1 ppm to 3000 ppm. In some embodiments, based on the total mass of the negative electrode material layer, the mass content of the Ca element in the negative electrode material layer may be 1 ppm, 5 ppm, 10 ppm, 50 ppm, 100 ppm, 200 ppm, 400 ppm, 500 ppm, 600 ppm, 800 ppm, 1000 ppm, 1500 ppm, 2000 ppm, 2500 ppm, 3000 ppm, or a value in a range formed by any two of the above values.

In some embodiments, the mass content of the cyclic ester compound containing a sulfate group and/or a sulfite group in the electrolyte is 0.01% to 5%, and the mass content of the Ca element in the negative electrode material layer is 0.1 ppm to 3000 ppm. For example, the mass content of the cyclic ester compound containing a sulfate group and/or a sulfite group in the electrolyte is 0.1%, the mass content of the Ca element in the negative electrode material layer is 10 ppm, and the ratio of the mass content of the cyclic ester compound containing a sulfate group and/or a sulfite group in the electrolyte to the mass content of the Ca element in the negative electrode material layer is 0.1%/10 ppm = 100, where 1% = 10000 ppm.

It can be understood that the Ca element in the negative electrode material layer can participate in the formation of the SEI film and consume part of the Ca element, leading to a decrease in the mass content of the Ca element in the negative electrode material layer, for example, the mass content of the Ca element in the negative electrode material layer can be reduced to 1 ppm. Therefore, based on the total mass of the negative electrode material layer, the mass content of the Ca element being 1 ppm to 3000 ppm is all within the scope protected by the embodiments of this application.

Controlling the mass content of the Ca element in the negative electrode material layer to be within an appropriate range can both form a sufficient SEI film containing organic calcium salt components, improve the overall toughness of the SEI film, and reduce the direct-current resistance of the sodium secondary battery, and reduce the risk of negative electrode plate preparation failure caused by slurry gelation during the negative electrode plate preparation process due to the excessive mass content of the Ca element in the negative electrode material layer, reduction in the first-cycle efficiency and aggravation of gas evolution caused by the formation of Ca(OH)₂ during the preparation process, or the degree of performance degradation of the sodium secondary battery caused by the increase in the direct-current resistance of the sodium secondary battery, balancing the storage performance and fast-charging performance of the sodium secondary battery.

In some embodiments, based on the total mass of the negative electrode material layer, the mass content of the Ca element in the negative electrode material layer is 50 ppm to 1000 ppm.

In some embodiments, based on the total mass of the negative electrode material layer, the mass content of the Ca element in the negative electrode material layer is 100 ppm to 1000 ppm.

Further controlling the mass content of the Ca element in the negative electrode material layer to be 50 ppm to 1000 ppm or 100 ppm to 1000 ppm helps to further comprehensively improve the storage performance and fast-charging performance of the sodium secondary battery.

In some embodiments, the negative electrode film layer may further optionally include a binder. The binder may include at least one selected from styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer may further optionally include a conductive agent. The conductive agent may include at least one selected from superconducting carbon, acetylene black, carbon black, Ketjen black, carbon dots, carbon nanotubes, graphene, and carbon nanofibers.

In some embodiments, the negative electrode film layer may further optionally include other auxiliaries, such as thickeners (for example, sodium carboxymethyl cellulose (CMC-Na)).

In some embodiments, the negative electrode plate can be prepared in the following manner: dispersing the components for preparing the negative electrode plate described above, such as the negative electrode active material, conductive agent, binder, and any other components, in a solvent (for example, deionized water) to form a negative electrode slurry; applying the negative electrode slurry onto the negative electrode current collector; and then performing processes such as drying and cold pressing to obtain the negative electrode plate.

### [Separator]

In some embodiments, the sodium secondary battery further includes a separator. Any known porous structure separator having good chemical stability and mechanical stability can be selected.

In some embodiments, the material of the separator may be selected from at least one of glass fiber, non-woven fabric, polyethylene, polypropylene, and polyvinylidene fluoride. The separator may be a single-layer film or a multi-layer composite film. When the separator is a multi-layer composite film, the materials of each layer may be the same or different.

### [Sodium secondary battery]

In some embodiments, the positive electrode plate, the negative electrode plate, and the separator can be made into an electrode assembly through a winding process or a stacking process.

In some embodiments, the sodium secondary battery may include an outer package. The outer package can be used to encapsulate the above electrode assembly and electrolyte.

In some embodiments, the outer package of the sodium secondary battery may be a hard shell, such as a hard plastic shell, aluminum shell, or steel shell. The outer package of the sodium secondary battery may also be a soft package, such as a pouch-type soft package. The material of the soft package may be plastic, and examples of the plastic include polypropylene, polybutylene terephthalate, and polybutylene succinate.

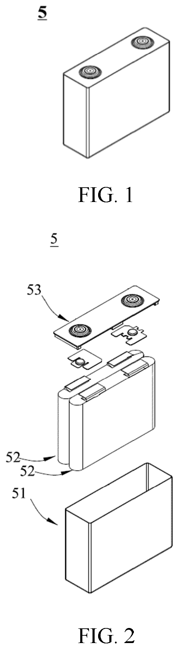

The shape of the sodium secondary battery in this application may be cylindrical, prismatic, or any other shape. For example, FIG. 1 is a sodium secondary battery 5 having a prismatic structure as an example.

In some embodiments, referring to FIG. 2, the outer package may include a housing 51 and a cover plate 53. The housing 51 may include a bottom plate and side plates connected to the bottom plate, and the bottom plate and side plates enclose to form an accommodating cavity. The housing 51 has an opening communicating with the accommodating cavity, and the cover plate 53 can cover the opening to close the accommodating cavity. The positive electrode plate, negative electrode plate, and separator can form an electrode assembly 52 through a winding process or a stacking process. The electrode assembly 52 is encapsulated in the accommodating cavity. The electrolyte is infiltrated into the electrode assembly 52. The number of electrode assemblies 52 contained in the sodium secondary battery 5 may be one or more, and those skilled in the art can select according to specific actual needs.

In some embodiments, the sodium secondary battery can be assembled into a battery module, and the number of sodium secondary batteries contained in the battery module can be one or more, and the specific number can be selected by those skilled in the art according to the application and capacity of the battery module.

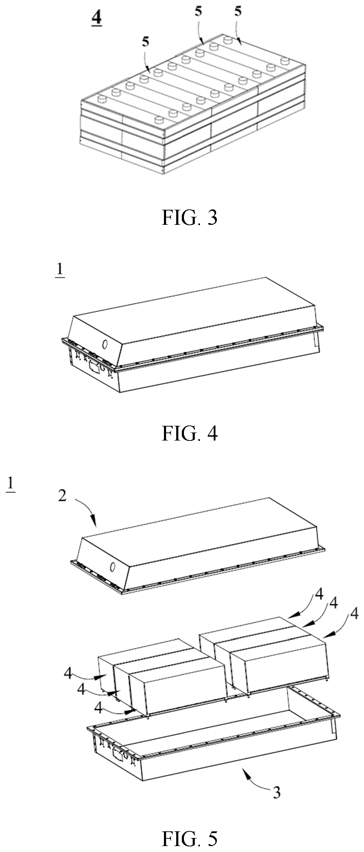

FIG. 3 is a battery module 4 as an example. Referring to FIG. 3, in the battery module 4, a plurality of sodium secondary batteries 5 may be sequentially arranged along the length direction of the battery module 4. Certainly, they can also be arranged in any other manner. Further, the plurality of sodium secondary batteries 5 can be fixed by fasteners.

Optionally, the battery module 4 may further include an outer housing having an accommodating space, and the plurality of sodium secondary batteries 5 are accommodated in the accommodating space.

In some embodiments, the above battery module can also be assembled into a battery pack, and the number of battery modules contained in the battery pack can be one or more, and the specific number can be selected by those skilled in the art according to the application and capacity of the battery pack.

FIG. 4 and FIG. 5 are a battery pack 1 as an example. Referring to FIG. 4 and FIG. 5, the battery pack 1 may include a battery box and a plurality of battery modules 4 disposed in the battery box. The battery box includes an upper case 2 and a lower case 3, the upper case 2 can cover the lower case 3 and form a closed space for accommodating the battery module 4. The plurality of battery modules 4 can be arranged in the battery box in any manner.

In addition, this application also provides an electric apparatus, the electric apparatus including at least one of the sodium secondary battery, battery module, or battery pack provided in this application. The sodium secondary battery, battery module, or battery pack can be used as a power source of the electric apparatus or as an energy storage unit of the electric apparatus. The electric apparatus may include mobile devices (for example, mobile phones or notebook computers), electric vehicles (for example, pure electric vehicles, hybrid electric vehicles, plug-in hybrid electric vehicles, electric bicycles, electric scooters, electric golf carts, or electric trucks), electric trains, ships and satellites, energy storage systems, or the like., but is not limited thereto.

As the electric apparatus, the sodium secondary battery, battery module, or battery pack can be selected according to its usage requirements.

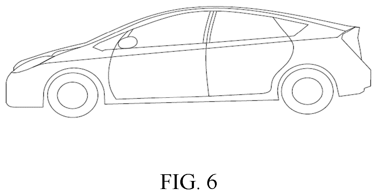

FIG. 6 is an electric apparatus as an example. The electric apparatus is a pure electric vehicle, hybrid electric vehicle, or plug-in hybrid electric vehicle, or the like. To meet the high power and high energy density requirements of the sodium secondary battery for the electric apparatus, a battery pack or battery module can be used.

As another example of the device, it may be a mobile phone, tablet computer, notebook computer, or the like. Such a device usually requires light and thin design, and a sodium secondary battery can be used as a power source.

### Examples

Hereinafter, examples of this application are described. The examples described below are exemplary and are only used to explain this application, and should not be construed as limiting this application. For specific techniques or conditions not specified in the examples, they are carried out according to the techniques or conditions described in the literature in the art or according to the product instructions. Reagents or instruments used without specifying the manufacturer are all conventional products that can be obtained commercially.

### I. Preparation methods

### Example 1

### 1) Electrolyte

In an argon atmosphere glove box (H₂O content <10 ppm, O₂ content <1 ppm), propylene carbonate (PC) and methyl ethyl carbonate (EMC) were mixed in a mass ratio of 30/70, and 1M NaPF₆ sodium salt was dissolved therein, then a first additive 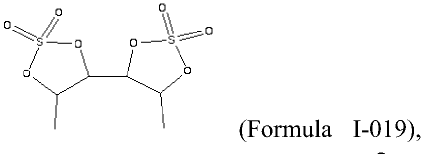 a second additive sodium difluoro(oxalato)borate, and a third additive 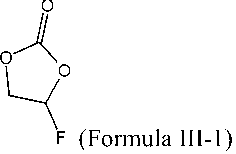 were added, and the mixture was stirred uniformly to prepare the electrolyte. Based on the total mass of the electrolyte, the mass content of the compound having the structure described in Formula I-13 as the first additive was 1%, the mass content of sodium difluoro(oxalato)borate as the second additive was 1%, and the mass content of the compound having the structure shown in Formula III-1 as the third additive was 1%.

### 2) Preparation of positive electrode plate

Preparation of Na_{7/9}Cu_{2/9}Fe_{1/9}Mn_{2/3}O₂ (13% Cu): 0.39M Na₂CO₃, 0.22M CuO, 0.06M Fe₂O₃, and 0.67M MnO₂ precursors were ball-milled in a ball mill for 12 h using ethanol as a dispersant, and after drying, the uniformly mixed powder was pressed into sheets at 20 MPa and sintered at 900°C for 12 h to obtain the product. The sintered powder needed to be quickly transferred to a glove box for storage.

The above positive electrode active material Na_{7/9}Cu_{2/9}Fe_{1/9}Mn_{2/3}O₂, conductive agent acetylene black, and binder polyvinylidene fluoride (PVDF) were fully stirred and mixed uniformly in an N-methylpyrrolidone solvent system in a weight ratio of 90:5:5 to obtain a positive electrode slurry; the positive electrode slurry was uniformly applied onto a positive electrode current collector aluminum foil having a thickness of 13 µm in an amount of 0.28 g (dry weight)/1540.25 mm²; and the aluminum foil was air-dried at room temperature and then transferred to a 120°C oven for drying for 1 h, followed by cold pressing and slitting to obtain the positive electrode plate.

### 3) Preparation of negative electrode plate

### Preparation of negative electrode material:

Negative electrode active material: Biomass material was calcined at 800°C for 2 h in a tube furnace containing an argon atmosphere, then washed with hydrochloric acid and deionized water respectively and dried, ground, and calcined at 1550°C for 4 h in a tube furnace in an argon atmosphere to obtain hard carbon.

Preparation of negative electrode plate: The above negative electrode active material hard carbon, conductive agent acetylene black, binder styrene-butadiene rubber (SBR), thickener sodium carboxymethyl cellulose (CMC-Na), and CaO were fully stirred and mixed uniformly in a deionized water solvent system in a weight ratio of 90:4:4:2:0.014 to obtain a negative electrode slurry; different gradients of Ca content in the negative electrode plate were adjusted by adding CaO to the negative electrode slurry; the negative electrode slurry was uniformly applied onto a negative electrode current collector copper foil having a thickness of 8 µm in an amount of 0.14 g (dry weight)/1540.25 mm²; and the copper foil was air-dried at room temperature and then transferred to a 120°C oven for drying for 1 h, followed by cold pressing and slitting to obtain the negative electrode plate.

### 4) Separator

A 9 µm polyethylene (PE) porous polymer film was used as the separator.

### 5) Preparation of battery

The positive electrode plate, the separator, and the negative electrode plate were stacked in order, with the separator placed between the positive and negative electrode plates to separate the positive electrode plate and the negative electrode plate, wound to obtain a bare cell, tabs were welded, the bare cell was placed in the outer package, the above-prepared electrolyte was injected into the dried cell, and after encapsulation, standing, formation, shaping, capacity testing, and other processes, the sodium secondary battery product of Example 1 was obtained.

The secondary batteries of Examples 2 to 33 and the secondary batteries of Comparative Examples 1 to 9 were prepared in a manner similar to the sodium secondary battery of Example 1, but the composition of the battery electrode plates and product parameters were adjusted, and different product parameters are detailed in Table 1.

For Examples 2 to 14, the mass contents of the first additive, the second additive, and the third additive were obtained by adjusting the content of the solvent in the electrolyte.

The first additive in Example 15 was

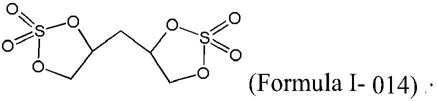

The first additive in Example 16 was

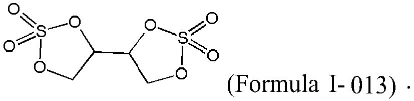

The first additive in Example 17 was

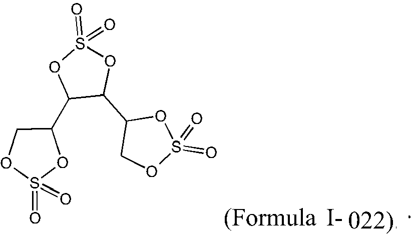

The third additive in Example 21 was

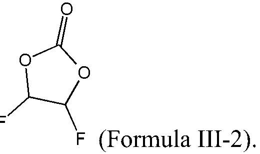

The third additive in Example 22 was

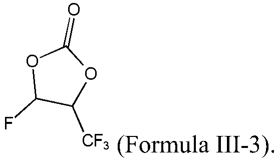

The third additive in Example 23 was

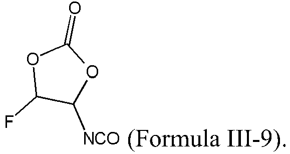

The negative electrode material layers containing different mass contents of the Ca elements in Examples 24 to 28 were obtained by adding different mass contents of CaO during the negative electrode plate preparation process.

The positive electrode active materials containing different mass contents of the Cu elements in Examples 29 to 33 were obtained by adjusting the stoichiometric ratios of the precursors Fe₂O₃, CuO, MnO₂, and Na₂CO₃ during the sintering process and the blending of positive electrode materials with different Cu contents during the positive electrode plate preparation process, specifically as follows:

Preparation of Na_{1/2}Fe_{1/2}Mn_{1/2}O₂ (0% Cu): 0.25M Na₂CO₃, 0.25M Fe₂O₃, and 0.5M MnO₂ precursors were ball-milled in a ball mill for 12 h using ethanol as a dispersant, and after drying, the uniformly mixed powder was pressed into sheets at 20 MPa and sintered at 900°C for 12 h to obtain the product. The sintered powder needed to be quickly transferred to a glove box for storage.

Preparation of Na_{9/10}Cu_{2/5}Fe_{1/10}Mn_{1/2}O₂ (23% Cu): 0.45M Na₂CO₃, 0.4M CuO, 0.05M Fe₂O₃, and 0.5M MnO₂ precursors were ball-milled in a ball mill for 12 h using ethanol as a dispersant, and after drying, the uniformly mixed powder was pressed into sheets at 20 MPa and sintered at 900°C for 12 h to obtain the product. The sintered powder needed to be quickly transferred to a glove box for storage.

Example 29: The positive electrode active material Na_{1/2}Fe_{1/2}Mn_{1/2}O₂, conductive agent acetylene black, and binder polyvinylidene fluoride (PVDF) were fully stirred and mixed uniformly in an N-methylpyrrolidone solvent system in a weight ratio of 90:5:5 to obtain a positive electrode slurry; the positive electrode slurry was uniformly applied onto a positive electrode current collector aluminum foil having a thickness of 13 µm in an amount of 0.28 g (dry weight)/1540.25 mm²; and the aluminum foil was air-dried at room temperature and then transferred to a 120°C oven for drying for 1 h, followed by cold pressing and slitting to obtain the positive electrode plate.

Example 30: 50% positive electrode active material Na_{1/2}Fe_{1/2}Mn_{1/2}O₂, 50% Na_{7/9}Cu_{2/9}Fe_{1/9}Mn_{2/3}O₂, conductive agent acetylene black, and binder polyvinylidene fluoride (PVDF) were fully stirred and mixed uniformly in an N-methylpyrrolidone solvent system in a weight ratio of 90:5:5 to obtain a positive electrode slurry; the positive electrode slurry was uniformly applied onto a positive electrode current collector aluminum foil having a thickness of 13 µm in an amount of 0.28 g (dry weight)/1540.25 mm²; and the aluminum foil was air-dried at room temperature and then transferred to a 120°C oven for drying for 1 h, followed by cold pressing and slitting to obtain the positive electrode plate.

Example 31: 50% positive electrode active material Na_{7/9}Cu_{2/9}Fe_{1/9}Mn_{2/3}O₂, 50% Na_{9/10}Cu_{2/5}Fe_{1/10}Mn_{1/2}O₂, conductive agent acetylene black, and binder polyvinylidene fluoride (PVDF) were fully stirred and mixed uniformly in an N-methylpyrrolidone solvent system in a weight ratio of 90:5:5 to obtain a positive electrode slurry; the positive electrode slurry was uniformly applied onto a positive electrode current collector aluminum foil having a thickness of 13 µm in an amount of 0.28 g (dry weight)/1540.25 mm²; and the aluminum foil was air-dried at room temperature and then transferred to a 120°C oven for drying for 1 h, followed by cold pressing and slitting to obtain the positive electrode plate.

Example 32: The positive electrode active material Na_{9/10}Cu_{2/5}Fe_{1/10}Mn_{1/2}O₂, conductive agent acetylene black, and binder polyvinylidene fluoride (PVDF) were fully stirred and mixed uniformly in an N-methylpyrrolidone solvent system in a weight ratio of 90:5:5 to obtain a positive electrode slurry; the positive electrode slurry was uniformly applied onto a positive electrode current collector aluminum foil having a thickness of 13 µm in an amount of 0.28 g (dry weight)/1540.25 mm²; and the aluminum foil was air-dried at room temperature and then transferred to a 120°C oven for drying for 1 h, followed by cold pressing and slitting to obtain the positive electrode plate.

Example 33: The positive electrode active material Na_{9/10}Cu_{2/5}Fe_{1/10}Mn_{1/2}O₂, conductive agent acetylene black, and binder polyvinylidene fluoride (PVDF) were fully stirred and mixed uniformly in an N-methylpyrrolidone solvent system in a weight ratio of 90:5:5 to obtain a positive electrode slurry; the positive electrode slurry was uniformly applied onto a positive electrode current collector aluminum foil having a thickness of 13 µm in an amount of 0.28 g (dry weight)/1540.25 mm²; and the aluminum foil was air-dried at room temperature and then transferred to a 120°C oven for drying for 1 h, followed by cold pressing and slitting to obtain the positive electrode plate.

The first additive in Comparative Example 8 was ethylene sulfate

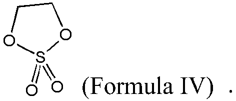

The third additive in Comparative Example 9 was a fluorinated cyclic carbonate compound not containing a fluorine atom

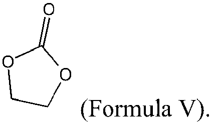

### II. Performance tests

### 1. Electrolyte

### 1) Test of mass contents of first additive, second additive, and third additive

The contents of the first additive, the second additive, and the third additive in the electrolyte of the sodium secondary battery can be qualitatively and quantitatively tested using ion chromatography (JY/T 020-1996, released on January 23, 1997, implemented on April 1, 1997) and gas chromatography (GB/T 6041-2002 and GB/T 9722-2006).

### 2. Negative electrode plate/positive electrode plate

### 1) Determining of Ca element content in negative electrode material layer

The content of Ca element in the negative electrode material layer was tested using inductively coupled plasma atomic emission spectrometry according to EPA 6010D-2014.

### 2) Determining of SEI film dissolution rate in negative electrode material layer

At room temperature, the sodium secondary battery was charged at a constant current of 1C to 4.0 V, then charged at a constant voltage of 4.0 V until the current was less than 0.05C, and then discharged at 0.33C to 1.5 V. The fully discharged sodium ion battery was disassembled, and the negative electrode plate was taken out. The negative electrode plate was first rinsed with methyl ethyl carbonate solvent three times to remove a large amount of residual electrolyte, and then the negative electrode plate was soaked in methyl ethyl carbonate solvent for 1 h to remove the residual electrolyte, and the washed negative electrode plate was finally obtained. 10 g of the washed negative electrode plate was soaked in 10 g of methyl ethyl carbonate solvent for 24 h, then filtered to obtain the supernatant for testing the Na element content. The Na element content in the supernatant can be tested using inductively coupled plasma atomic emission spectrometry according to EPA 6010D-2014. The Na element content in the solvent after soaking for 24 h was used to represent the SEI dissolution rate, and the higher the Na element content, the faster the SEI dissolution rate.

### 3) Determining of the Cu element content in positive electrode active material

The content of the Cu element in the positive electrode material layer, that is, Content of the Cu element in the positive electrode active material = Content of the Cu element in the positive electrode material layer/Mass content of positive electrode active material in the positive electrode material layer, was tested using inductively coupled plasma atomic emission spectrometry according to EPA 6010D-2014.

### 3. Battery

### 1) Low-voltage storage volume change rate

At 25°C, the fresh sodium secondary batteries prepared in the examples and comparative examples were left standing for 5 minutes, charged at a constant current of 1C to 4.0 V, then charged at a constant voltage until the current was less than or equal to 0.05C, left standing for 5 minutes, and then discharged at a constant current of 1C to 1.5 V, and the volume V1 of the battery was tested using the water displacement method; then the battery was placed in a 55°C oven, after storage for 3 months, the battery was taken out, and the volume V2 was tested. The volume change rate of the battery = (V2 - V1)/V1 × 100%.

### 2) Charging performance at 0°C

Three-electrode battery preparation: First, a sodium vanadium phosphate reference electrode was prepared by fully stirring and mixing uniformly the active material sodium vanadium phosphate, conductive agent acetylene black, and a binder polyvinylidene fluoride (PVDF) in an N-methylpyrrolidone solvent system in a weight ratio of 90:5:5 to form a slurry, which was uniformly applied onto a 10 cm long aluminum wire (with the coating area occupying 1 cm), and dried at 100°C to obtain the target reference electrode; during the sodium secondary battery preparation process, the above reference electrode was placed between the negative electrode plate and the separator to obtain the three-electrode battery.

0°C fast charging capability test: The above three-electrode battery containing the reference was charged at a constant current of 1C at 25°C to a voltage of 4.0 V, then charged at a constant voltage until the current was less than or equal to 0.05C, left standing for 5 minutes, and then discharged at a constant current of 1C to 1.5 V, and the discharge capacity was recorded as C1; then the battery was placed in a 0°C environment and left standing for 2 h, charged at a constant current of 0.33C to a voltage of 4.0 V, and the charging capacity before the negative electrode potential reached -3.377 V compared to the reference potential was obtained as C2. The charging performance of the battery at 0°C = C2/C1 × 100%.

### 3) Direct-current resistance

At 25°C, the state of charge of the single battery was adjusted to 50% SOC, left standing for 30 min, the battery voltage at that time was recorded as U1 (V), discharged at 4C for 10s, the battery voltage at that time was recorded as U2 (V), and the corresponding battery discharge current I (mA) was 4 × battery design capacity (mAh). The direct-current resistance DCR = (U1 - U2)/I, in units of mΩ.

### 4) Cycling performance

At 25°C, the prepared battery was charged at a constant current of 0.33C to 4.0 V, then charged at a constant voltage of 4.0 V until the current dropped to 0.05C, left standing for 10 min, and then discharged at a constant current of 0.33C to 1.5 V, which was the first charge/discharge cycle of the battery, and the discharge capacity this time was recorded as the discharge capacity (CO) of the first cycle of the battery; the above steps were repeated for the same battery, and after the 500th cycle, the discharge capacity (C1) of the battery was obtained, and the capacity retention rate after 500 cycles = C1/C0 × 100%. The test process for the comparative examples and other examples was the same as above.

### III. Test result analysis of examples and comparative examples

Batteries of examples and comparative examples were prepared according to the above methods, the battery parameter tables are shown in Table 1 and Table 2 below, and the performance parameters were measured, with results shown in Table 3 below.

**Table 1 Electrolyte parameter table**

| No. | First additive | | Second additive | | Third additive | | Mass ratio of first additive to second additive | Mass ratio of first additive to third additive | Mass ratio of second additive to third additive | (*A*B*)/*C*² |
|---|---|---|---|---|---|---|---|---|---|---|
| | Type | Mass content (%) | Type | Mass content (%) | Type | Mass content (%) | | | | |
| Example 1 | Formula I-019 | 1 | Sodium difluoro(oxalato)borate | 1 | Formula III-1 | 1 | 1 | 1 | 1 | 1 |
| Example 2 | Formula I-019 | 0.01 | Sodium difluoro(oxalato)borate | 1 | Formula III-1 | 1 | 0.01 | 0.01 | 1 | 0.01 |
| Example 3 | Formula I-019 | 0.1 | Sodium difluoro(oxalato)borate | 1 | Formula III-1 | 1 | 0.1 | 0.1 | 1 | 0.1 |
| Example 4 | Formula I-019 | 2 | Sodium difluoro(oxalato)borate | 1 | Formula III-1 | 1 | 2 | 2 | 1 | 2 |
| Example 5 | Formula I-019 | 5 | Sodium difluoro(oxalato)borate | 1 | Formula III-1 | 1 | 5 | 5 | 1 | 5 |
| Example 6 | Formula I-019 | 5 | Sodium difluoro(oxalato)borate | 0.01 | Formula III-1 | 1 | 500 | 5 | 0.01 | 0.05 |
| Example 7 | Formula I-019 | 1 | Sodium difluoro(oxalato)borate | 0.1 | Formula III-1 | 1 | 10 | 1 | 0.1 | 0.1 |
| Example 8 | Formula I-019 | 1 | Sodium difluoro(oxalato)borate | 2 | Formula III-1 | 1 | 0.5 | 1 | 2 | 2 |
| Example 9 | Formula I-019 | 1 | Sodium difluoro(oxalato)borate | 5 | Formula III-1 | 1 | 0.2 | 1 | 5 | 5 |
| Example 10 | Formula I-019 | 1 | Sodium difluoro(oxalato)borate | 0.01 | Formula III-1 | 1 | 100 | 1 | 0.01 | 0.01 |
| Example 11 | Formula I-019 | 1 | Sodium difluoro(oxalato)borate | 1 | Formula III-1 | 0.01 | 1 | 100 | 100 | 10000 |
| Example 12 | Formula I-019 | 1 | Sodium difluoro(oxalato)borate | 1 | Formula III-1 | 0.1 | 1 | 10 | 10 | 100 |
| Example 13 | Formula I-019 | 1 | Sodium difluoro(oxalato)borate | 1 | Formula III-1 | 2 | 1 | 0.5 | 0.5 | 0.25 |
| Example 14 | Formula I-019 | 1 | Sodium difluoro(oxalato)borate | 1 | Formula III-1 | 5 | 1 | 0.2 | 0.2 | 0.04 |
| Example 15 | Formula I-014 | 1 | Sodium difluoro(oxalato)borate | 1 | Formula III-1 | 1 | 1 | 1 | 1 | 1 |
| Example 16 | Formula I-013 | 1 | Sodium difluoro(oxalato)borate | 1 | Formula III-1 | 1 | 1 | 1 | 1 | 1 |
| Example 17 | Formula I-022 | 1 | Sodium difluoro(oxalato)borate | 1 | Formula III-1 | 1 | 1 | 1 | 1 | 1 |
| Example 18 | Formula I-019 | 1 | Lithium difluoro(oxalato)borate | 1 | Formula III-1 | 1 | 1 | 1 | 1 | 1 |
| Example 19 | Formula I-019 | 1 | Magnesium difluoro(oxalato)borate | 1 | Formula III-1 | 1 | 1 | 1 | 1 | 1 |
| Example 20 | Formula I-019 | 1 | Aluminum difluoro(oxalato)borate | 1 | Formula III-1 | 1 | 1 | 1 | 1 | 1 |
| Example 21 | Formula I-019 | 1 | Sodium difluoro(oxalato)borate | 1 | Formula III-2 | 1 | 1 | 1 | 1 | 1 |
| Example 22 | Formula I-019 | 1 | Sodium difluoro(oxalato)borate | 1 | Formula III-3 | 1 | 1 | 1 | 1 | 1 |
| Example 23 | Formula I-019 | 1 | Sodium difluoro(oxalato)borate | 1 | Formula III-9 | 1 | 1 | 1 | 1 | 1 |
| Example 24 | Formula I-019 | 1 | Sodium difluoro(oxalato)borate | 1 | Formula III-1 | 1 | 1 | 1 | 1 | 1 |
| Example 25 | Formula I-019 | 1 | Sodium difluoro(oxalato)borate | 1 | Formula III-1 | 1 | 1 | 1 | 1 | 1 |
| Example 26 | Formula I-019 | 1 | Sodium difluoro(oxalato)borate | 1 | Formula III-1 | 1 | 1 | 1 | 1 | 1 |
| Example 27 | Formula I-019 | 0.1 | Sodium difluoro(oxalato)borate | 1 | Formula III-1 | 1 | 0.1 | 0.1 | 1 | 0.1 |
| Example 28 | Formula I-019 | 0.1 | Sodium difluoro(oxalato)borate | 1 | Formula III-1 | 1 | 0.1 | 0.1 | 1 | 0.1 |
| Example 29 | Formula I-019 | 1 | Sodium difluoro(oxalato)borate | 1 | Formula III-1 | 1 | 1 | 1 | 1 | 1 |
| Example 30 | Formula I-019 | 1 | Sodium difluoro(oxalato)borate | 1 | Formula III-1 | 1 | 1 | 1 | 1 | 1 |
| Example 31 | Formula I-019 | 1 | Sodium difluoro(oxalato)borate | 1 | Formula III-1 | 1 | 1 | 1 | 1 | 1 |
| Example 32 | Formula I-019 | 1 | Sodium difluoro(oxalato)borate | 1 | Formula III-1 | 1 | 1 | 1 | 1 | 1 |
| Example 33 | Formula I-014 | 0.1 | Sodium difluoro(oxalato)borate | 1 | Formula III-1 | 1 | 0.1 | 0.1 | 1 | 0.1 |
| Comparative Example 1 | / | / | / | / | / | / | / | / | / | / |
| Comparative Example 2 | Formula I-019 | 1 | / | / | / | / | / | / | / | / |
| Comparative Example 3 | / | / | Sodium difluoro(oxalato)borate | 1 | / | / | / | / | / | / |
| Comparative Example 4 | / | / | / | / | Formula III-1 | 1 | / | / | / | / |
| Comparative Example 5 | Formula I-019 | 1 | Sodium difluoro(oxalato)borate | 1 | / | / | 1 | / | / | / |
| Comparative Example 6 | Formula I-019 | 1 | / | / | Formula III-1 | 1 | / | 1 | / | / |
| Comparative Example 7 | / | / | Sodium difluoro(oxalato)borate | 1 | Formula III-1 | 1 | / | / | 1 | / |
| Comparative Example 8 | Ethylene sulfate | 1 | Sodium difluoro(oxalato)borate | 1 | Formula III-1 | 1 | 1 | 1 | 1 | 1 |
| Comparative Example 9 | Formula I-019 | 1 | Sodium difluoro(oxalato)borate | 1 | Fluorinated cyclic carbonate compound not containing a fluorine atom (Formula V) | 1 | 1 | 1 | 1 | 1 |

**Table 2 Negative electrode plate and positive electrode plate parameter table**

| No. | Negative electrode plate | | Positive electrode plate | |
|---|---|---|---|---|
| | Mass content of Ca (ppm) | Mass content ratio of first additive to Ca | Mass content of Cu (%) | Mass content ratio of first additive to Cu |
| Example 1 | 100 | 100 | 13 | 0.077 |
| Example 2 | 100 | 1 | 13 | 0.001 |
| Example 3 | 100 | 10 | 13 | 0.008 |
| Example 4 | 100 | 200 | 13 | 0.154 |
| Example 5 | 100 | 500 | 13 | 0.385 |
| Example 6 | 101 | 495 | 13 | 0.385 |
| Example 7 | 100 | 100 | 13 | 0.077 |
| Example 8 | 100 | 100 | 13 | 0.077 |
| Example 9 | 100 | 100 | 13 | 0.077 |
| Example 10 | 100 | 100 | 13 | 0.077 |
| Example 11 | 100 | 100 | 13 | 0.077 |
| Example 12 | 100 | 100 | 13 | 0.077 |
| Example 13 | 100 | 100 | 13 | 0.077 |
| Example 14 | 100 | 100 | 13 | 0.077 |
| Example 15 | 100 | 100 | 13 | 0.077 |
| Example 16 | 100 | 100 | 13 | 0.077 |
| Example 17 | 100 | 100 | 13 | 0.077 |
| Example 18 | 100 | 100 | 13 | 0.077 |
| Example 19 | 100 | 100 | 13 | 0.077 |
| Example 20 | 100 | 100 | 13 | 0.077 |
| Example 21 | 100 | 100 | 13 | 0.077 |
| Example 22 | 100 | 100 | 13 | 0.077 |
| Example 23 | 100 | 100 | 13 | 0.077 |
| Example 24 | 50 | 200 | 13 | 0.077 |
| Example 25 | 1000 | 10 | 13 | 0.077 |
| Example 26 | 3000 | 3 | 13 | 0.077 |
| Example 27 | 1000 | 1 | 13 | 0.008 |
| Example 28 | 2000 | 0.5 | 13 | 0.008 |
| Example 29 | 100 | 100 | 0 | / |
| Example 30 | 100 | 100 | 6.5 | 0.154 |
| Example 31 | 100 | 100 | 18 | 0.056 |
| Example 32 | 100 | 100 | 23 | 0.043 |
| Example 33 | 100 | 10 | 23 | 0.004 |
| Comparative Example 1 | 100 | / | 15 | / |
| Comparative Example 2 | 100 | 100 | 15 | / |
| Comparative Example 3 | 100 | / | 15 | / |
| Comparative Example 4 | 100 | / | 15 | 0.067 |
| Comparative Example 5 | 100 | 100 | 15 | / |
| Comparative Example 6 | 100 | 100 | 15 | 0.067 |
| Comparative Example 7 | 100 | / | 15 | 0.067 |
| Comparative Example 8 | 100 | 100 | 15 | 0.067 |
| Comparative Example 9 | 100 | 100 | 15 | 0.067 |

**Table 3 Battery performance test table**

| No. | Battery volume expansion rate after high-temperature storage (%) | Charging performance at 0°C (%) | Direct-current resistance (mΩ) | Cycling performance (%) | SEI dissolution rate (ppm) |
|---|---|---|---|---|---|
| Example 1 | 5 | 85 | 852 | 90 | 30 |
| Example 2 | 42 | 62 | 904 | 75 | 305 |
| Example 3 | 26 | 76 | 883 | 85 | 116 |
| Example 4 | 5 | 82 | 864 | 89 | 45 |
| Example 5 | 4 | 74 | 938 | 87 | 63 |
| Example 6 | 32 | 70 | 925 | 81 | 169 |
| Example 7 | 18 | 79 | 869 | 86 | 105 |
| Example 8 | 5 | 84 | 849 | 91 | 35 |
| Example 9 | 4 | 80 | 983 | 85 | 72 |
| Example 10 | 29 | 65 | 895 | 81 | 252 |
| Example 11 | 6 | 84 | 845 | 86 | 720 |
| Example 12 | 5 | 85 | 850 | 88 | 257 |
| Example 13 | 6 | 85 | 903 | 89 | 26 |
| Example 14 | 8 | 80 | 1157 | 87 | 28 |
| Example 15 | 4 | 83 | 851 | 85 | 29 |
| Example 16 | 5 | 82 | 866 | 87 | 35 |
| Example 17 | 5 | 83 | 844 | 89 | 40 |
| Example 18 | 6 | 84 | 846 | 91 | 37 |
| Example 19 | 7 | 86 | 851 | 90 | 28 |
| Example 20 | 4 | 85 | 857 | 85 | 38 |
| Example 21 | 7 | 85 | 866 | 86 | 31 |
| Example 22 | 5 | 87 | 863 | 88 | 35 |
| Example 23 | 4 | 83 | 854 | 89 | 27 |
| Example 24 | 9 | 83 | 864 | 85 | 37 |
| Example 25 | 6 | 85 | 885 | 89 | 38 |
| Example 26 | 14 | 79 | 958 | 84 | 41 |
| Example 27 | 20 | 82 | 891 | 82 | 47 |
| Example 28 | 26 | 79 | 962 | 80 | 51 |
| Example 29 | 1 | 84 | 841 | 83 | 25 |
| Example 30 | 3 | 85 | 848 | 86 | 36 |
| Example 31 | 19 | 83 | 869 | 92 | 31 |
| Example 32 | 35 | 80 | 885 | 93 | 37 |
| Example 33 | 52 | 75 | 897 | 88 | 45 |
| Comparative Example 1 | 98 | 35 | 1250 | 62 | 1304 |
| Comparative Example 2 | 76 | 42 | 1168 | 67 | 1128 |
| Comparative Example 3 | 72 | 45 | 1092 | 70 | 1042 |
| Comparative Example 4 | 84 | 40 | 1137 | 69 | 860 |
| Comparative Example 5 | 9 | 84 | 843 | 85 | 896 |
| Comparative Example 6 | 52 | 57 | 1007 | 73 | 343 |
| Comparative Example 7 | 46 | 59 | 929 | 71 | 336 |
| Comparative Example 8 | 58 | 41 | 1125 | 69 | 258 |
| Comparative Example 9 | 15 | 79 | 1210 | 80 | 552 |

The electrolytes in Examples 1 to 33 all include a first additive and a second additive. The first additive includes a compound having a structure represented by Formula I-013, a compound having a structure represented by Formula I-014, a compound having a structure represented by Formula I-019, or a compound having a structure represented by Formula I-022. The second additive includes sodium difluoro(oxalato)borate, lithium difluoro(oxalato)borate, magnesium difluoro(oxalato)borate, or aluminum difluoro(oxalato)borate. The third additive includes a compound having a structure represented by Formula III-1, a compound having a structure represented by Formula III-2, a compound having a structure represented by Formula III-3, or a compound having a structure represented by Formula III-9. The sodium secondary batteries containing the electrolyte all have excellent storage performance, cycling performance, and fast-charging performance, as well as a low SEI film dissolution rate.

From the comparison between Examples 1 to 23 and Comparative Example 1, it can be seen that the electrolyte including the first additive, the second additive, and the third additive is conducive to reducing the battery volume expansion rate after high-temperature storage, the direct-current resistance of the sodium secondary battery, and the dissolution rate of the SEI film, as well as improving the charging performance and cycling capacity retention rate of the sodium secondary battery.

From the comparison between Examples 1 and 7 to 14 and Comparative Example 2, Examples 1 to 5 and 11 to 14 and Comparative Example 3, and Examples 1 to 10 and Comparative Example 4, it can be seen that, compared with the electrolyte including the first additive, the second additive, or the third additive, the electrolyte in this application including the first additive, the second additive, and the third additive simultaneously is conducive to reducing the battery volume expansion rate after high-temperature storage, the direct-current resistance of the sodium secondary battery, and the dissolution rate of the SEI film, as well as improving the charging performance and cycling capacity retention rate of the sodium secondary battery.

From the comparison between Examples 1 and 11 to 14 and Comparative Example 5, Examples 1 and 7 to 10 and Comparative Example 6, and Examples 1 to 5 and Comparative Example 7, it can be seen that, compared with the electrolyte including at least two of the first additive, the second additive, and the third additive, the electrolyte in this application including the first additive, the second additive, and the third additive simultaneously can balance the charging performance and cycling performance of the sodium secondary battery.

From the comparison between Examples 1 and 15 to 23 and Comparative Examples 8 to 9, it can be seen that this application simultaneously containing a compound having a structure represented by Formula I-1 or Formula I-2 as the first additive, difluoro(oxalato)borate as the second additive, and a fluorinated carbonate compound as the third additive is conducive to reducing the battery volume expansion rate after high-temperature storage, the direct-current resistance of the sodium secondary battery, and the dissolution rate of the SEI film, as well as improving the charging performance and cycling capacity retention rate of the sodium secondary battery.

From Examples 1 to 10, it can be seen that controlling the mass ratio of the first additive to the second additive to be 0.01 to 500 enables the sodium secondary battery to have a low volume expansion rate after high-temperature storage, low direct-current resistance, and low dissolution rate of the SEI film, as well as excellent charging performance and cycling performance. From the comparison between Examples 1, 3 to 5, and 7 to 10 and Examples 2 and 6, it can be seen that further controlling the mass ratio of the first additive to the second additive to be 0.1 to 100 helps further reduce the volume expansion rate of the sodium secondary battery after high-temperature storage.

From Examples 1 to 5, it can be seen that, based on the total mass of the electrolyte, controlling the mass content of the compound having a structure represented by Formula I-019 as the first additive to be 0.01% to 5% enables the sodium secondary battery to have a low volume expansion rate after high-temperature storage, low direct-current resistance, and low dissolution rate of the SEI film, as well as excellent charging performance and cycling performance. From the comparison between Examples 1, 3, and 4 and Examples 2, and 5, it can be seen that, based on the total mass of the electrolyte, further controlling the mass content of the compound having a structure represented by Formula I-019 as the first additive to be 0.1% to 2% helps further reduce the direct-current resistance of the sodium secondary battery and improves its charging performance.

From Examples 1 and 7 to 10, it can be seen that, based on the total mass of the electrolyte, controlling the mass content of sodium difluoro(oxalato)borate as the second additive to be 0.01% to 5% enables the sodium secondary battery to have a low volume expansion rate after high-temperature storage, low direct-current resistance, and low dissolution rate of the SEI film, as well as excellent charging performance and cycling performance. From the comparison between Examples 1, 7, and 8 and Examples 9 to 10, it can be seen that, based on the total mass of the electrolyte, further controlling the mass content of sodium difluoro(oxalato)borate as the second additive to be 0.1% to 2% helps further reduce the direct-current resistance of the sodium secondary battery and improves its charging performance.

From Examples 1 and 11 to 14, it can be seen that, based on the total mass of the electrolyte, controlling the mass content of the compound having a structure represented by Formula III-1 as the third additive to be 0.01% to 5% enables the sodium secondary battery to have a low volume expansion rate after high-temperature storage, low direct-current resistance, and low dissolution rate of the SEI film, as well as excellent charging performance and cycling performance. From the comparison between Examples 1, 12, and 13 and Examples 11 and 14, it can be seen that, based on the total mass of the electrolyte, further controlling the mass content of the compound having a structure represented by Formula III-1 as the third additive to be 0.1% to 2% helps further reduce the direct-current resistance of the sodium secondary battery and improves its charging performance.

From Examples 1 and 15 to 23, it can be seen that the first additive including a compound having a structure represented by Formula I-013, a compound having a structure represented by Formula I-014, a compound having a structure represented by Formula I-019, or a compound having a structure represented by Formula I-022, the second additive including sodium difluoro(oxalato)borate, lithium difluoro(oxalato)borate, magnesium difluoro(oxalato)borate, or aluminum difluoro(oxalato)borate, and the third additive including a compound having a structure represented by Formula III-1, a compound having a structure represented by Formula III-2, a compound having a structure represented by Formula III-3, or a compound having a structure represented by Formula III-9 all enable the sodium secondary battery to have a low volume expansion rate after high-temperature storage and low direct-current resistance, as well as excellent charging performance and cycling performance.

From the comparison between Examples 1 and 24 to 27 and Example 28, it can be seen that controlling the ratio of the mass content of the first additive in the electrolyte to the mass content of the Ca element in the negative electrode material layer to be greater than or equal to 1 is conducive to reducing the volume expansion rate of the sodium secondary battery after high-temperature storage and the dissolution rate of the SEI film, as well as improving the cycling capacity retention rate of the sodium secondary battery.

From Examples 1 and 24 to 27, it can be seen that controlling the mass content of the Ca element in the negative electrode material layer to be 50 ppm to 3000 ppm enables the sodium secondary battery to have a low volume expansion rate after high-temperature storage, low direct-current resistance, and low dissolution rate of the SEI film, as well as excellent charging performance and cycling performance. From the comparison between Examples 1, 24, and 25 and Example 26, it can be seen that further controlling the mass content of the Ca element in the negative electrode material layer to be 50 ppm to 1000 ppm helps further reduce the volume expansion rate of the sodium secondary battery after high-temperature storage, the direct-current resistance, and the dissolution rate of the SEI film, as well as improve the charging performance and cycling capacity retention rate of the sodium secondary battery.

From the comparison between Examples 1, 30 to 33 and Example 29, it can be seen that introducing a Cu element into the positive electrode active material is conducive to improving the cycling performance of the sodium secondary battery.

From Examples 1 and 30 to 33, it can be seen that controlling the ratio of the mass content of the first additive in the electrolyte to the mass content of the Cu element in the positive electrode active material to be greater than or equal to 0.004 enables the sodium secondary battery to have a low volume expansion rate after high-temperature storage, low direct-current resistance, and low dissolution rate of the SEI film, as well as excellent charging performance and cycling performance.

From Examples 3 and 30 to 33, it can be seen that controlling the mass content of the Cu element in the positive electrode active material to be less than or equal to 23% enables the sodium secondary battery to have a low volume expansion rate after high-temperature storage, low direct-current resistance, and low dissolution rate of the SEI film, as well as excellent charging performance and cycling performance. From the comparison between Examples 1, 30, and 31 and Example 32, it can be seen that further controlling the mass content of the Cu element in the positive electrode active material to be 6.5% to 18% helps further reduce the volume expansion rate of the sodium secondary battery after high-temperature storage, the direct-current resistance, and the dissolution rate of the SEI film, as well as improve the charging performance of the sodium secondary battery.

It should be noted that this application is not limited to the above embodiments. The above embodiments are merely examples, and embodiments having substantially the same configuration as the technical idea and exhibiting the same effects within the scope of the technical solution of this application are included in the technical scope of this application. In addition, various modifications that can be conceived by those skilled in the art and other forms constructed by combining some components of the embodiments without departing from the gist of this application are also included in the scope of this application.

## Claims

1. An electrolyte for a sodium secondary battery, wherein the electrolyte comprises a first additive, a second additive and a third additive, wherein the first additive comprises a cyclic ester compound containing a sulfate group and/or a sulfite group, the second additive comprises difluoro(oxalato)borate, the third additive comprises a fluorinated cyclic carbonate compound, and the cyclic ester compound containing a sulfate group and/or a sulfite group comprises at least one selected from a compound having a structure represented by Formula I-1 and a compound having a structure represented by Formula I-2: 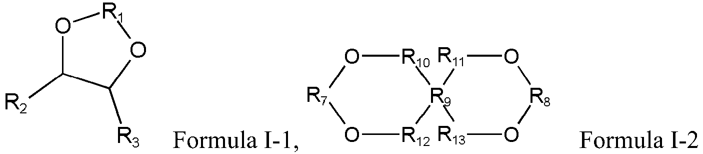
in Formula I-1, R₁ comprises 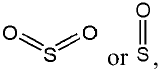 R₂ and R₃ are each independently selected from 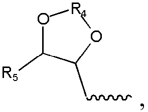 a hydrogen atom, C1-C6 alkyl group, a halogen atom, C1-C3 haloalkyl group, C1-C3 alkoxy group, C1-C3 haloalkoxy group, C1-C3 alkenyl group, ester group, cyano group, sulfonic acid group, and at least one of them, and at least one of R₂ and R₃ comprises 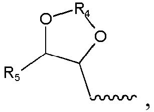 R₄ comprises at least one selected from 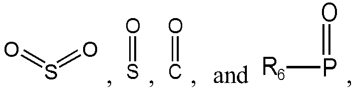 and R₅ and R₆ are each independently selected from 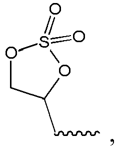 a hydrogen atom, C1-C6 alkyl group, a halogen atom, C1-C3 haloalkyl group, C1-C3 alkoxy group, C1-C3 haloalkoxy group, C1-C3 alkenyl group, ester group, cyano group, sulfonic acid group, and at least one of them; and
in Formula I-2, R7₇ comprises 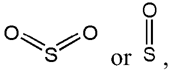 R₈ comprises at least one selected from 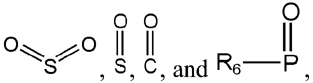 R₉ comprises at least one selected from C, C-R₁₄-C, and 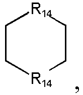 R₁₄ comprises at least one selected from a single bond, C1-C6 alkyl group, and C1-C6 ether group, and C1-C3 alkoxy group, and R₁₀, R₁₁, R₁₂, and R₁₃ are each independently selected from at least one of a single bond and C1-C3 alkylene group.

2. The electrolyte according to claim 1, wherein the difluoro(oxalato)borate comprises a compound represented by Formula II,
(F₂C₂O₄B)_{y}M^{y+} Formula II
in Formula II, M^{y+} comprises one or more selected from Li⁺, Na⁺, K⁺, Rb⁺, Cs⁺, Mg²⁺, Ca²⁺, Ba²⁺, Fe²⁺, Ni²⁺, Al³⁺, Fe³⁺, and Ni³⁺, and y = 1, 2, or 3; and/or
the fluorinated cyclic carbonate compound comprises a compound having a structure represented by Formula III, 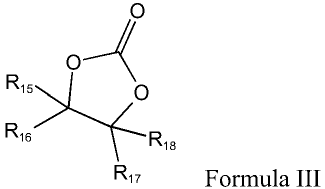
in Formula III, R₁₅, R₁₆, R₁₇ and R₁₈ are each independently selected from a hydrogen atom, C1-C6 alkyl group, a halogen atom, C1-C3 haloalkyl group, C1-C3 alkoxy group, C1-C3 haloalkoxy group, C1-C3 alkenyl group, isocyanate group, ester group, cyano group, sulfonic acid group, and at least one of them, and at least one of R₁₅, R₁₆, R₁₇ and R₁₈ comprises an F atom.

3. The electrolyte according to claim 1, wherein, in Formula I-1, R₁ comprises 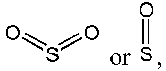 R₂ and R₃ are each independently selected from 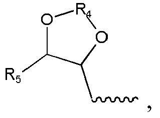 a hydrogen atom, C1-C6 alkyl group, a halogen atom, and at least one of them, at least one of R₂ and R₃ comprises 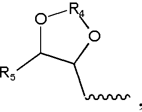 , R₄ comprises at least one selected from 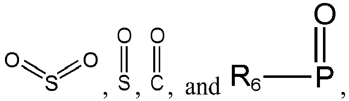 and R₅ and R₆ are each independently selected from a hydrogen atom, C1-C6 alkyl group, a halogen atom, and at least one of them; and/or
in Formula 1-2, R₇ comprises 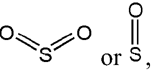 R₈ comprises at least one selected from 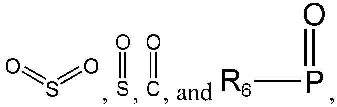 R₉ comprises at least one selected from C and C-R₁₄-C, R₁₄ comprises at least one selected from a single bond, C1-C6 alkyl group, and C1-C6 ether group, and R₁₀, R₁₁, R₁₂, and R₁₃ are each independently selected from at least one of a single bond and C1-C3 alkylene group.

4. The electrolyte according to claim 1, wherein the cyclic ester compound containing a sulfate group and/or a sulfite group comprises at least one selected from

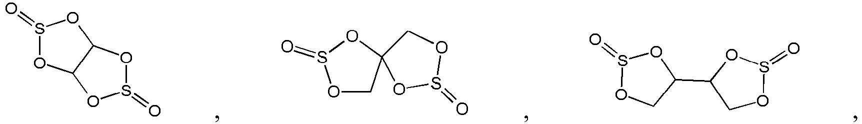

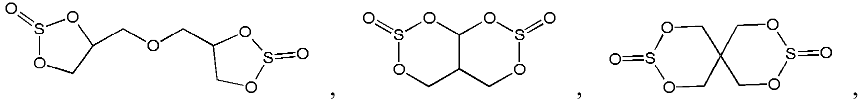

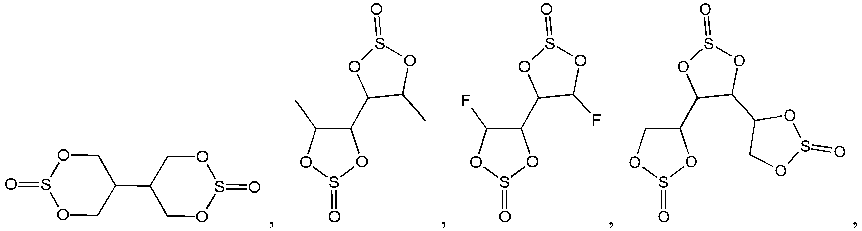

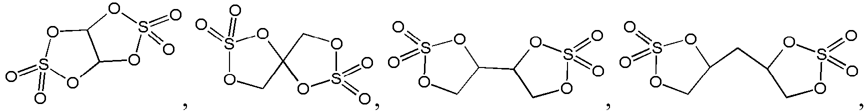

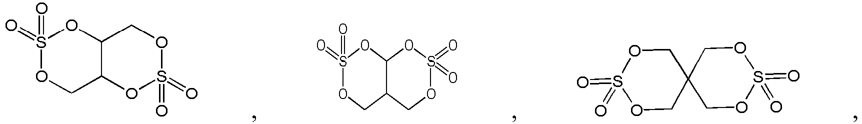

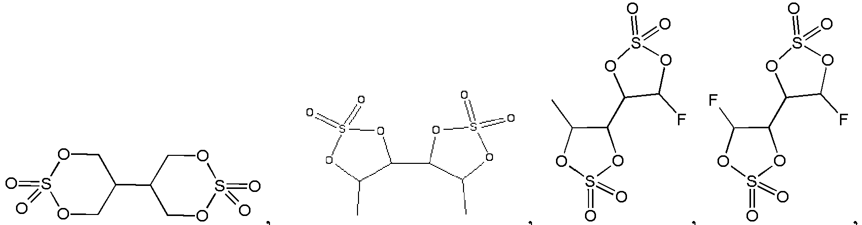

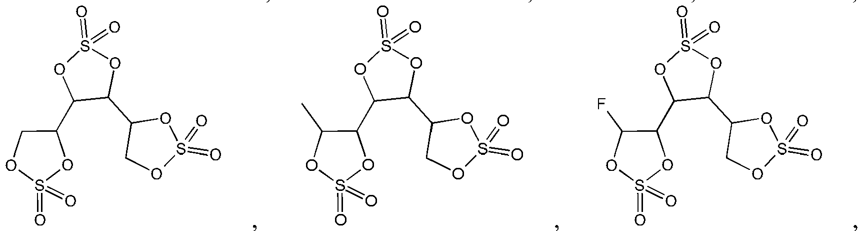

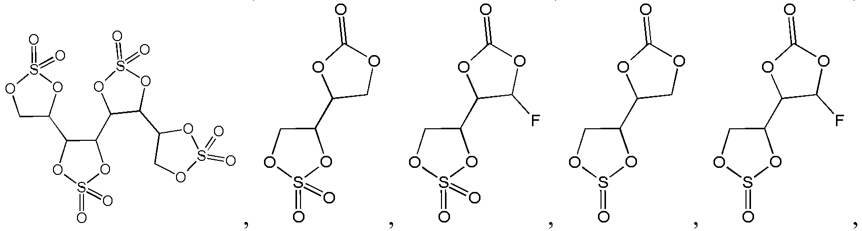

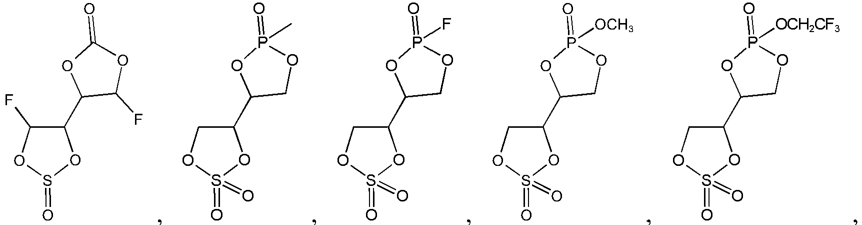

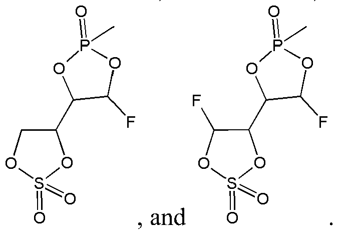

5. The electrolyte according to claim 1, wherein the cyclic ester compound containing a sulfate group and/or a sulfite group comprises at least one selected from 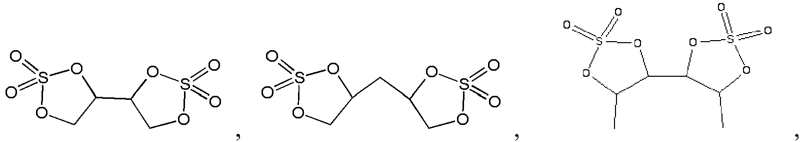 and

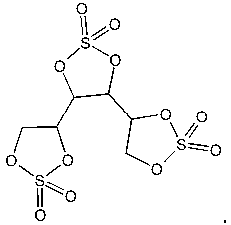

6. The electrolyte according to claim 2, wherein in Formula II, M^{y+} comprises at least one selected from Li⁺ and Na⁺.

7. The electrolyte according to claim 2, wherein in Formula III, R₁₅, R₁₆, R₁₇ and R₁₈ are each independently selected from a hydrogen atom, C1-C6 alkyl group, a halogen atom, C1-C3 haloalkyl group, C1-C3 haloalkoxy group, C1-C3 alkenyl group, isocyanate group, and at least one of them, and at least one of R₁₅, R₁₆, R₁₇ and R₁₈ comprises an F atom.

8. The electrolyte according to claim 2, wherein the structure represented by Formula III comprises at least one selected from 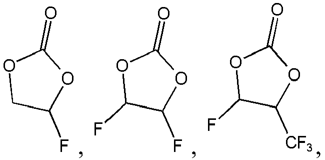 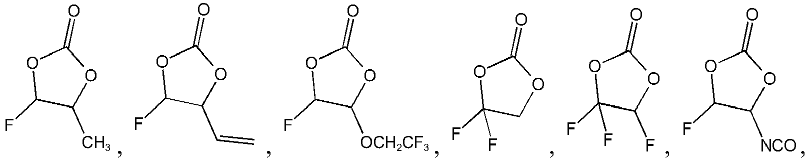 and

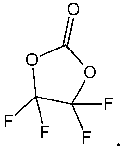

9. The electrolyte according to claim 2, wherein the structure represented by Formula III comprises at least one selected from

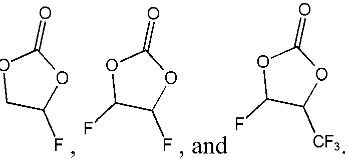

10. The electrolyte according to any one of claims 1 to 9, wherein the mass ratio of the cyclic ester compound containing a sulfate group and/or a sulfite group to the difluoro(oxalato)borate is 0.01 to 500.

11. The electrolyte according to any one of claims 1 to 9, wherein the mass ratio of the cyclic ester compound containing a sulfate group and/or a sulfite group to the difluoro(oxalato)borate is 0.1 to 100 or 1 to 100.

12. The electrolyte according to any one of claims 1 to 9, wherein the mass ratio of the cyclic ester compound containing a sulfate group and/or a sulfite group to the fluorinated cyclic carbonate compound is 0.01 to 100.

13. The electrolyte according to any one of claims 1 to 9, wherein the mass ratio of the cyclic ester compound containing a sulfate group and/or a sulfite group to the fluorinated cyclic carbonate compound is 0.1 to 50 or 1 to 50.

14. The electrolyte according to any one of claims 1 to 9, wherein the mass ratio of the difluoro(oxalato)borate to the fluorinated cyclic carbonate compound is 0.01 to 100.

15. The electrolyte according to any one of claims 1 to 9, wherein the mass ratio of the difluoro(oxalato)borate to the fluorinated cyclic carbonate compound is 0.1 to 50 or 1 to 50.

16. The electrolyte according to any one of claims 1 to 9, wherein based on the total mass of the electrolyte, the mass content A of the cyclic ester compound containing a sulfate group and/or a sulfite group, the mass content B of the difluoro(oxalato)borate, and the mass content C of the fluorinated cyclic carbonate compound satisfy: 0.01 ≤ (A × B)/C² ≤ 10000.

17. The electrolyte according to any one of claims 1 to 9, wherein based on the total mass of the electrolyte, the mass content A of the cyclic ester compound containing a sulfate group and/or a sulfite group, the mass content B of the difluoro(oxalato)borate, and the mass content C of the fluorinated cyclic carbonate compound satisfy: 0.05 ≤ (A × B)/C² ≤ 100.

18. The electrolyte according to any one of claims 1 to 9, wherein based on the total mass of the electrolyte, the mass content A of the cyclic ester compound containing a sulfate group and/or a sulfite group is 0.01% to 5%.

19. The electrolyte according to any one of claims 1 to 9, wherein based on the total mass of the electrolyte, the mass content A of the cyclic ester compound containing a sulfate group and/or a sulfite group is 0.1% to 2%.

20. The electrolyte according to any one of claims 1 to 9, wherein based on the total mass of the electrolyte, the mass content B of the difluoro(oxalato)borate is 0.01% to 5%.

21. The electrolyte according to any one of claims 1 to 9, wherein based on the total mass of the electrolyte, the mass content B of the difluoro(oxalato)borate is 0.1% to 2%.

22. The electrolyte according to any one of claims 1 to 9, wherein based on the total mass of the electrolyte, the mass content C of the fluorinated cyclic carbonate compound is 0.01% to 5%.

23. The electrolyte according to any one of claims 1 to 9, wherein based on the total mass of the electrolyte, the mass content C of the fluorinated cyclic carbonate compound is 0.1% to 2%.

24. A sodium secondary battery, comprising a positive electrode plate, a negative electrode plate, and the electrolyte according to any one of claims 1 to 23.

25. The sodium secondary battery according to claim 24, wherein the positive electrode plate comprises a positive electrode current collector and a positive electrode material layer located on at least one side of the positive electrode current collector, the positive electrode material layer comprises a positive electrode active material, and the positive electrode active material comprises at least one selected from a layered transition metal oxide, a Prussian blue compound, and a polyanion compound.

26. The sodium secondary battery according to claim 25, wherein the layered transition metal oxide has a general formula of NaₓMnₐFe_{b}Ni_{c}M_{d}NₑO_{2-δ}Q_{f}, wherein M comprises at least one selected from Ti, Li, V, Cr, Cu, Zn, Zr, Nb, Mo, Sn, Hf, Ta, Mg and Al, N comprises at least one selected from Si, P, B, S and Se, Q comprises at least one selected from F, Cl and N, 0.66 ≤ x ≤ 1, 0 < a ≤ 0.7, 0 < b ≤ 0.7, 0 ≤ c ≤ 0.23, 0 ≤ d < 0.3, 0 ≤ e ≤ 0.3, 0 ≤ f ≤ 0.3, 0 ≤ δ ≤ 0.3, a + b + c + d + e = 1, 0 < e + f ≤ 0.3, 0 < (e + f)/a ≤ 0.3, 0.2 ≤ d + e + f ≤ 0.3, and (b + c)/a ≤ 1.5.

27. The sodium secondary battery according to claim 25 or 26, wherein the positive electrode active material comprises a layered transition metal oxide containing a Cu element; and
the mass content of the cyclic ester compound containing a sulfate group and/or a sulfite group in the electrolyte and the mass content of the Cu element in the positive electrode active material have a ratio greater than or equal to 0.002, and the mass content of the Cu element is based on the total mass of the positive electrode active material.

28. The sodium secondary battery according to claim 27, wherein based on the total mass of the positive electrode active material, the mass content of the Cu element in the positive electrode active material is less than or equal to 23%.

29. The sodium secondary battery according to claim 27, wherein based on the total mass of the positive electrode active material, the mass content of the Cu element in the positive electrode active material is 5% to 20%.

30. The sodium secondary battery according to any one of claims 24 to 26 and 28 to 29, wherein the negative electrode plate comprises a negative electrode current collector and a negative electrode material layer located on at least one side of the negative electrode current collector, and the negative electrode material layer comprises a Ca element; and
the mass content of the cyclic ester compound containing a sulfate group and/or a sulfite group in the electrolyte and the mass content of the Ca element in the negative electrode material layer have a ratio greater than or equal to 1, and the mass content of the Ca element is based on the total mass of the negative electrode material layer.

31. The sodium secondary battery according to claim 30, wherein based on the total mass of the negative electrode material layer, the mass content of the Ca element in the negative electrode material layer is 1 ppm to 3000 ppm.

32. The sodium secondary battery according to claim 30, wherein based on the total mass of the negative electrode material layer, the mass content of the Ca element in the negative electrode material layer is 50 ppm to 1000 ppm or 100 ppm to 1000 ppm.

33. The sodium secondary battery according to claim 30, wherein the negative electrode material layer further comprises a negative electrode active material, and the negative electrode active material comprises one or more selected from hard carbon, tin alloy, and metal oxide.

34. An electric apparatus, comprising the sodium secondary battery according to any one of claims 24 to 33.
